# EUROPEAN PATENT APPLICATION

(11) **EP 4 641 046 A1**
(43) Date of publication of application: **29.10.2025**
(21) Application number: 23907089.9
(22) Date of filing: 20.12.2023
(51) Int. Cl.: F16H 1/16, F16H 55/24

(54) **WORM SPEED REDUCER**

(30) Priority: 23.12.2022 JP 2022206278
(71) Applicant: NSK Steering & Control, Inc., Tokyo, 141-0032 (JP)
(72) Inventor: SUGAWARA, Hiroyuki, Maebashi-shi, Gunma 371-8527 (JP)
(74) Representative: Müller-Boré & Partner Patentanwälte PartG mbB
(86) International application number: PCT/JP2023/045710
(87) International publication number: WO 2024/135729

(57) **Abstract**

Portions with respect to a third direction perpendicular to both a first direction which is a biasing direction of an elastic member 21 and a second direction which is an axial direction of the worm housing 23, on side surfaces of the other side with respect to the second direction of two pad elastic pressure plates 54, come in contact with two holder-pressed surfaces 52 of a holder 19, and by elastically pressing the two holder-pressed surfaces 52 toward the other side in the second direction, apply a preload to contact portions between a holder-engaging portion 41 of the holder 19 and a pad-engaging portion of a pad 20. The portions with respect to the third direction of the two pad elastic pressure plates 54 come in surface contact with or in line contact at at least two locations with respect to the third direction with the two holder-pressed surfaces 52.

## Description

### TECHNICAL FIELD

The present disclosure relates to a worm gear reducer incorporated in, for example, an electric power steering device.

### BACKGROUND ART

Electric power steering devices that use an electric motor as an auxiliary power source are widely used as devices for reducing a force required to operate the steering wheel when applying a steering angle to the steered wheels of an automobile.

Electric power steering devices are roughly classified into different structures depending on a mounting position of the electric motor. More specifically, various types of structures have been proposed, including: a column assist type that applies auxiliary power to a steering shaft that is rotatably supported inside a steering column; a pinion assist type that applies auxiliary power to a pinion shaft that is an input shaft of a steering gear unit; and a dual pinion type that provides a steering gear unit with a separate pinion shaft from the pinion shaft as an input shaft of the steering gear unit, and applies auxiliary power to the separate pinion shaft.

In either structure, auxiliary power from an electric motor is applied through a gear reducer to a shaft member that rotates or moves linearly in response to operation of a steering wheel. As such a speed reducer, a worm gear reducer is widely used. A worm gear reducer of an electric power steering device includes a worm that is rotationally driven by an electric motor, and a worm wheel that engages with the worm.

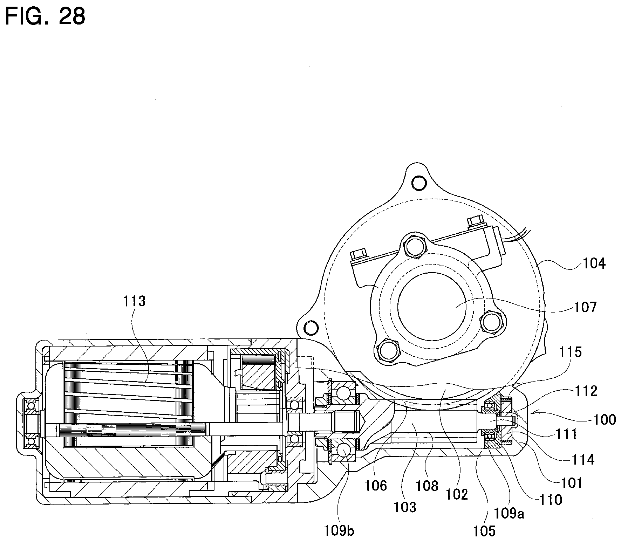

FIG. 28 illustrates an example of a known structure of a worm gear reducer as described in Japanese Patent No. 4381024. The worm gear reducer 100 includes a housing 101, a worm wheel 102, and a worm 103.

The housing 101 has a wheel housing 104 and a worm housing 105 having a central axis that is at a skewed position to a central axis of the wheel housing 104 and having an intermediate portion in an axial direction that opens into the wheel housing 104.

The worm wheel 102 has wheel teeth 106 on an outer circumferential surface thereof, and is supported and fixed coaxially around a rotating shaft 107 that is rotatably supported inside the wheel housing 104.

The worm 103 has worm teeth 108 on an outer circumferential surface of an intermediate portion in the axial direction thereof that engage with the wheel teeth 106. The worm 103 is rotatably supported inside the worm housing 105 by two ball bearings 109a, 109b at two positions in the axial direction sandwiching the worm teeth 108. Of the two ball bearings 109a, 109b, an outer ring of the ball bearing 109a on a tip-end side of the worm 103 (right side in FIG. 28) is press-fitted into a holder 110 fixed and fitted inside a portion on a back-end side of the worm housing 105. An inner ring of the ball bearing 109a is fitted with a clearance fit onto a large diameter portion 111 provided at a portion of the worm 103 located farther on the tip-end side than the worm teeth 108 through a bushing 112 made of synthetic resin. That is, the inner ring of the ball bearing 109a is fitted without any looseness onto the bushing 112 that is fitted onto the large diameter portion 111 of the worm 103 with a clearance fit. An outer ring of the ball bearing 109b on a base-end side of the worm 103 (left side in FIG. 28) is fitted inside an opening portion of the worm housing 105 with a clearance fit, and an inner ring of the ball bearing 109b is fitted onto the base-end portion of the worm 103. An output shaft of an electric motor 113 is connected to the base-end portion of the worm 103 so as to be capable of transmitting torque. That is, the worm 103 can be rotationally driven by the electric motor 113.

In the worm gear reducer 100, unavoidable backlash exists at the engaging portion between the wheel teeth 106 and the worm teeth 108 due to dimensional errors and assembly errors of the components of the worm gear reducer 100. Due to the presence of this backlash, an unpleasant rattling noise may occur at the engaging portion when changing the direction of rotation of the steering wheel. In the illustrated example, in order to suppress the occurrence of such teeth rattling noise, the tip-end portion of the worm 103 is elastically biased toward the worm wheel 102 side.

That is, the base end portion of the worm 103 is supported by the ball bearing 109b having a radial gap to the worm housing 105 so as to be capable of slight oscillating displacement. An annular gap exists over the entire circumference between an outer circumferential surface of the large diameter portion 111 of the worm 103 and an inner circumferential surface of the bushing 112. A pad 114 is fitted onto the tip-end portion of the worm 103, and a torsion coil spring 115 is provided between the pad 114 and the holder 110. The torsion coil spring 115 elastically pressing the pad 114 toward the worm wheel 102 side with respect to a first direction (up and down direction in FIG. 28) in which the worm 103 moves toward and away from the worm wheel 102, so as to elastically bias the tip-end portion of the worm 103 toward the worm wheel 102 (upper side in FIG. 28) with respect to the first direction. Thus, backlash between the wheel teeth 106 and the worm teeth 108 is reduced, which reduces the occurrence of teeth rattling noise.

### CITATION LIST

### PATENT LITERATURE

Patent Literature 1: Japanese Patent No. 4381024

### SUMMARY OF INVENTION

### TECHNICAL PROBLEM

In the structure described in Japanese Patent No. 4381024, in order to enable the tip-end portion of the worm 103 to be pressed in a direction approaching the worm wheel 102, an annular gap exists around the entire circumference between the outer circumferential surface of the large diameter portion 111 of the worm 103 and the inner circumferential surface of the bushing 112. In addition, although smaller than the annular gap that exists between the outer circumferential surface of the large diameter portion 111 of the worm 103 and the inner circumferential surface of the bushing 112, an annular gap also exists around the entire circumference between the tip-end portion of the worm 103 and a through hole of the pad 114. Therefore, when changing the direction of rotation of the steering wheel, that is, when changing the direction of rotation of the worm 103, of the reaction force applied from the wheel teeth 106 to the worm teeth 108, the direction of a component relating to a third direction (front-rear direction in FIG. 28) perpendicular to both the first direction and the second direction (left-right direction in FIG. 28) that is the axial direction of the worm housing 105 may change, causing the tip-end portion of the worm 103 to be forcefully displaced in the third direction. Therefore, there is room for improvement in terms of suppressing the occurrence of abnormal noises such as teeth rattling noise.

An object of a technique according to the present disclosure is to provide a worm gear reducer that can stably prevent a tip-end portion of a worm from being displaced in a third direction perpendicular to both a first direction, which is a biasing direction of the tip-end portion, and a second direction, which is an axial direction of a worm housing, when a rotational direction of the worm changes.

### SOLUTION TO PROBLEM

A worm gear reducer according to one aspect of the present disclosure includes a housing, a worm wheel, a worm, a holder, a pad, and an elastic member.

The housing has a wheel housing, and a worm housing arranged at a skewed position to the wheel housing, the worm housing having an intermediate portion that opens to the wheel housing.

The worm wheel has wheel teeth on an outer circumferential surface thereof, and is rotatably supported inside the wheel housing.

The worm has worm teeth on an outer circumferential surface thereof, the worm teeth engaging with the wheel teeth, and is rotatably supported inside the worm housing.

The holder is arranged between a tip-end portion of the worm and the worm housing.

The pad is fitted onto the tip-end portion of the worm.

The elastic member is assembled to the holder so as to elastically bias the tip-end portion of the worm toward the worm wheel through the pad.

The holder has two holder-engaging portions provided at positions sandwiching the pad from both sides with respect to a third direction perpendicular to both a first direction that is a biasing direction by the elastic member and a second direction that is an axial direction of the worm housing, and two holder-pressed surfaces facing one side in the second direction.

The pad has two pad-engaging portions that are provided on both sides in the third direction so as to come in contact with the two holder-engaging portions, and two pad elastic pressure plates that are located farther on the one side in the second direction than the two pad-engaging portions, and that each extend from a central portion of the pad with respect to the third direction to sides separated from each other with respect to the third direction.

**In** the worm gear reducer according to one aspect of the present disclosure, portions with respect to the third direction on side surfaces on the other side with respect to the second direction of the two pad elastic pressure plates come in contact with the two holder-pressed surfaces, so as to elastically press the two holder-pressed surfaces toward the other side in the second direction, applying a preload having components in opposite directions to each other with respect to the third direction to contact portions between the holder-engaging portions and the pad-engaging portions. The portions with respect to the third direction come in surface contact with or come in line contact with at least two locations with respect to the third direction with the two holder-pressed surfaces.

In the worm gear reducer according to one aspect of the present disclosure, the two pad elastic pressure plates respectively include at least one protrusion extending in the first direction on the side surfaces on the other side with respect to the second direction, and the portions with respect to the third direction are respectively formed by a tip-end portion of the at least one protrusion. A height of the at least one protrusion with respect to the second direction increases continuously or stepwise while going away from the worm with respect to the third direction.

The at least one protrusion may be a plurality of protrusions arranged at a distance from each other in the third direction. In this case, a height of the plurality of protrusions with respect to the second direction becomes greater as positioned farther from the worm with respect to the third direction.

In this case, a cross-sectional shape of the tip-end portions of the plurality of protrusions with respect to an imaginary plane perpendicular to the first direction may be a straight line.

Alternatively or additionally, the tip-end portion of the at least one protrusion may be an inclined surface that is inclined in a direction toward the other side in the second direction while going away from the worm with respect to the third direction.

The two pad elastic pressure plates may respectively have a slit at an end portion on a central side of the pad with respect to the third direction, the slit penetrating in the second direction and extending in the first direction.

In this case, a height with respect to the second direction of the at least one protrusion may decrease while going from a central portion toward both sides with respect to the first direction. More specifically, a cross-sectional shape of the tip-end portion of the protrusion with respect to an imaginary plane perpendicular to the second direction may be an arc shape.

In the worm gear reducer according to one aspect of the present disclosure, one of the two holder-pressed surfaces and the portions of the two pad elastic pressure plates that press the two holder-pressed surfaces are inclined surfaces that are inclined in a direction that approach the other of the two holder-pressed surfaces and the portions of the two pad elastic pressure plates that press the two holder-pressed surfaces with respect to the second direction while going away from the worm with respect to the third direction.

The two holder-pressed surfaces may be inclined surfaces that are inclined in a direction toward the one side in the second direction while going away from the worm with respect to the third direction. In this case, the two pad elastic pressure plates may respectively include at least one protrusion on the side surfaces on the other side with respect to the second direction, the at least one protrusion extending in the first direction as the portions of the two pad elastic pressure plates that press the two holder-pressed surfaces.

In the worm gear reducer according to one aspect of the present disclosure, the two holder-engaging portions may be two holder inclined surfaces extending in the first direction and inclining toward each other while approaching the one side in the second direction, and the two pad-engaging portions may be two pad inclined surfaces coming in surface contact with the two holder inclined surfaces.

In the worm gear reducer according to one aspect of the present disclosure, the elastic member may be a leaf spring.

In this case, the elastic member may have a partially cut cylindrical shape having a discontinuous portion at one location in a circumferential direction when viewed from the second direction, and the elastic member may have a base portion located on a side far from the worm wheel with respect to the first direction, and two arm portions extending toward the circumferential direction from end portions on both sides in the circumferential direction of the base portion. The two arm portions respectively have, in order from the side close to the base portion with respect to the circumferential direction, a base-side wide portion, a narrow portion, and a tip-end-side wide portion. A width dimension with respect to the second direction of the base-side wide portion and a width dimension with respect to the second direction of the tip-end-side wide portion are the same. The narrow portion has a width dimension with respect to the second direction smaller than the width dimension with respect to the second direction of the base-side wide portion and the width dimension in the second direction of the tip-end-side wide portion.

The worm gear reducer according to one aspect of the present disclosure can be implemented by appropriately combining the above-described configurations to the extent that no contradiction occurs.

### EFFECT OF INVENTION

With the worm gear reducer according to one aspect of the present disclosure, when the rotation direction of the worm changes, it is possible to stably prevent the tip-end portion of the worm from being displaced in the third direction perpendicular to both the first direction, which is the biasing direction of the tip-end portion, and the second direction, which is the axial direction of the worm housing.

### BRIEF DESCRIPTION OF DRAWINGS

FIG. 1 is a diagram illustrating an electric power steering device incorporating a worm gear reducer of a first example of an embodiment according to the present disclosure.
FIG. 2 is a diagram illustrating a part of the electric power steering device incorporating the worm gear reducer gear of the first example.
FIG. 3 is a cross-sectional view taken along line A-A of FIG. 2.
FIG. 4 is an enlarged view of the upper right portion of FIG. 3 with a housing omitted.
FIG. 5 is a perspective view illustrating a tip-end portion of a worm and members arranged around the tip-end portion of the worm.
FIG. 6 is an exploded perspective view of the tip-end portion of the worm and the members arranged around the tip-end portion of the worm.
FIG. 7 is a view as seen from the right side of FIG. 4.
FIG. 8 is a view as seen from the left side of FIG. 7.
FIG. 9 is a view as seen from above in FIG. 7.
FIG. 10 is a cross-sectional view taken along line B-B of FIG. 7.
FIG. 11 is a partially enlarged view of FIG. 10.
FIG. 12A is a perspective view illustrating a holder taken out, and FIG. 12B is a perspective view of the holder as seen from a different direction than that of FIG. 12A.
FIG. 13A is a view of the holder taken out and as seen from the right side in FIG. 4, FIG. 13B is a view of the holder as seen from the left side in FIG. 13A, FIG. 13C is a view of the holder as seen from above in FIG. 13A, and FIG. 13D is a view of the holder as seen from the rear side in FIG. 13A (the left side in FIG. 4).
FIG. 14A is a perspective view illustrating a pad taken out, and FIG. 14B is a perspective view of the pad as seen from a different direction than that of FIG. 14A.
FIG. 15A is a view of the pad taken out and as seen from the right side in FIG. 4, FIG. 15B is a view of the pad as seen from the left side in FIG. 15A, FIG. 15C is a view of the pad as seen from above in FIG. 15A, and FIG. 15D is a view of the pad as seen from the rear side in FIG. 15A (the left side in FIG. 4).
FIG. 16 is a view of an elastic member taken out and as seen from the right side in FIG. 4.
FIG. 17A is a partially enlarged cross-sectional view of the pad in a state before a pad elastic pressure plate is elastically deformed, and FIG. 17B is a partially enlarged cross-sectional view illustrating a contact portion between a protrusion and a holder-pressed surface.
FIGS. 18A and 18B are diagrams corresponding to FIGS. 17A and 17B and illustrate a reference example for the first example.
FIGS. 19A and 19B are diagrams corresponding to FIGS. 17A and 17B for a second example of an embodiment according to the present disclosure.
FIGS. 20A and 20B are diagrams corresponding to FIGS. 17A and 17B for a third example of an embodiment according to the present disclosure.
FIG. 21 is a side view illustrating a pad taken out from a worm gear reducer of a fourth example of an embodiment according to the present disclosure.
FIG. 22A is a partially enlarged side view illustrating the pad of the fourth example in a state before the pad elastic pressure plate is elastically deformed, and FIG. 22B is a partially enlarged side view illustrating a contact portion between the protrusion and the holder-pressed surface.
FIGS. 23A to 23D are views illustrating an elastic member removed from a worm gear reducer of a fifth example of an embodiment according to the present disclosure, where FIG. 23A is a view as seen from one side in the third direction, FIG. 23B is a view as seen from the second direction, FIG. 23C is a view as seen from the other side in the third direction, and FIG. 23D is a view as seen from the first direction.
FIGS. 24A to FIG. 24C are views illustrating elastic members of the fifth example stacked together, where FIG. 24A is a perspective view, FIG. 24B is a view as seen from the first direction, and FIG. 24C is a view as seen from one side in the third direction.
FIGS. 25A to 25D are views corresponding to FIG. 23 and illustrate a reference example for the fifth example.
FIGS. 26A to 26C are views corresponding to FIG. 24A to 24C for the reference example illustrated in FIG. 25A to 25D.
FIG. 27A is a partially enlarged cross-sectional view illustrating a holder removed of a sixth example of an embodiment according to the present disclosure, and FIG. 27B is a partially enlarged cross-sectional view illustrating the contact portion between the protrusion and the pad elastic pressure plate.
FIG. 28 is a cross-sectional view illustrating an example of a known configuration of a worm gear reducer.

### DESCRIPTION OF EMBODIMENTS

### [First Example]

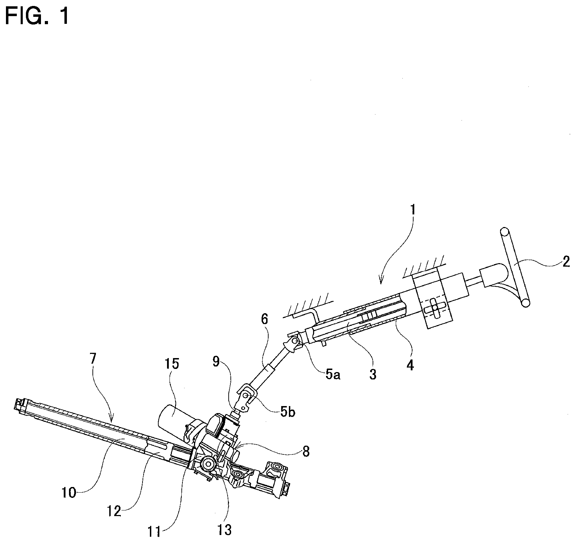

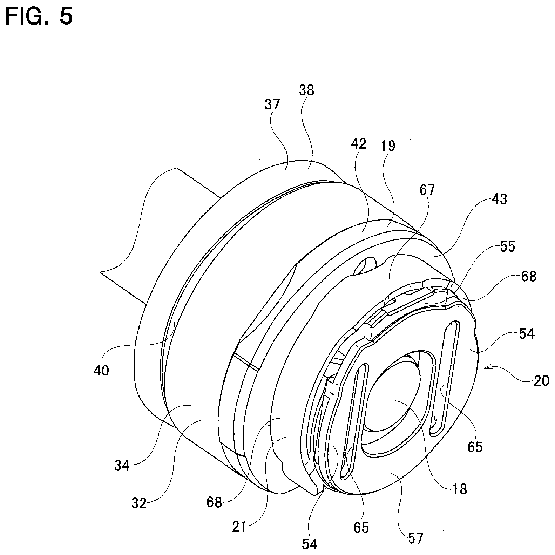

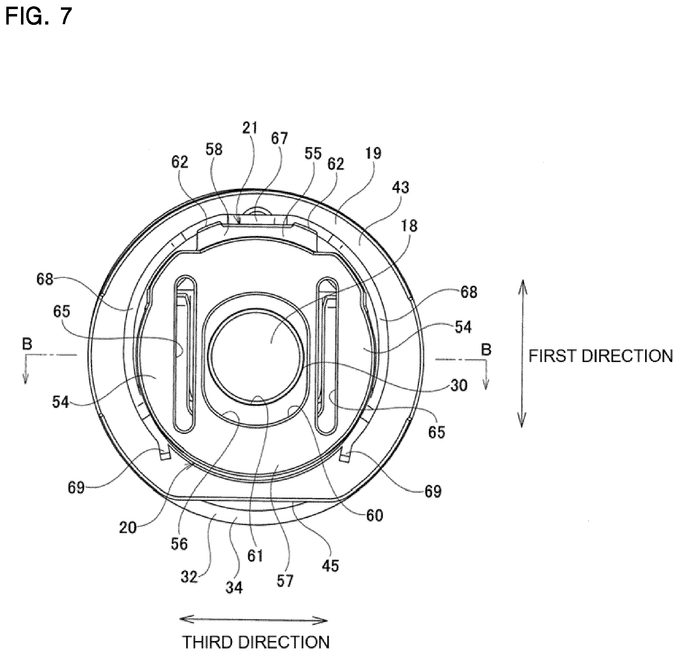

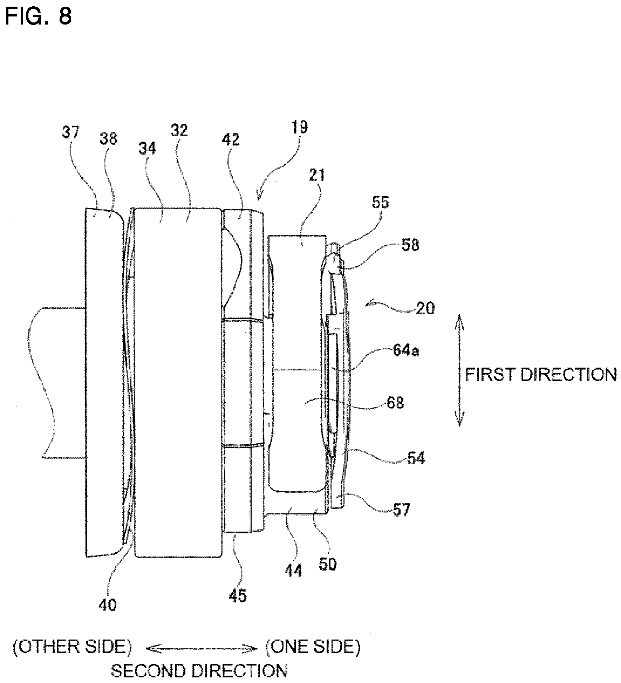

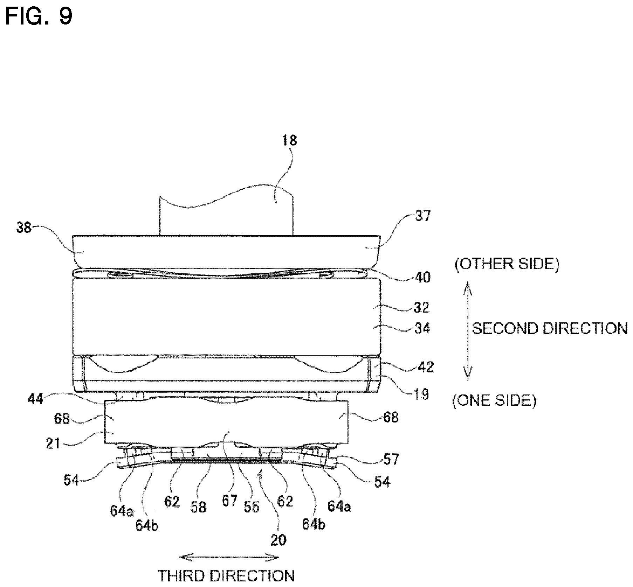

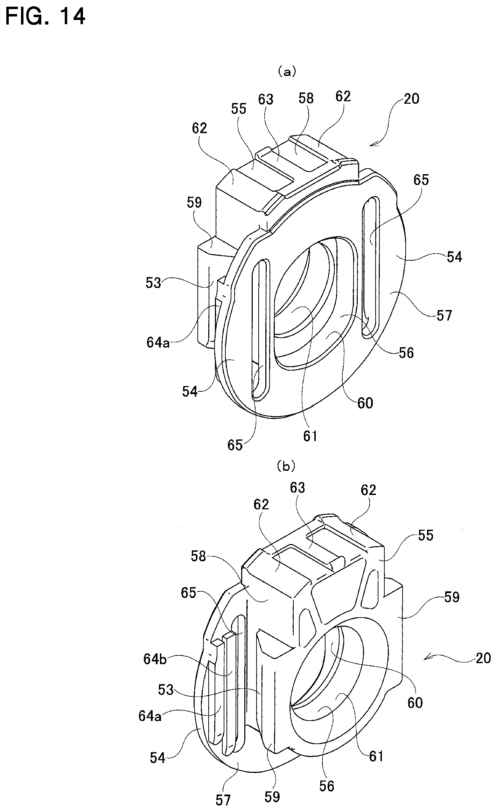

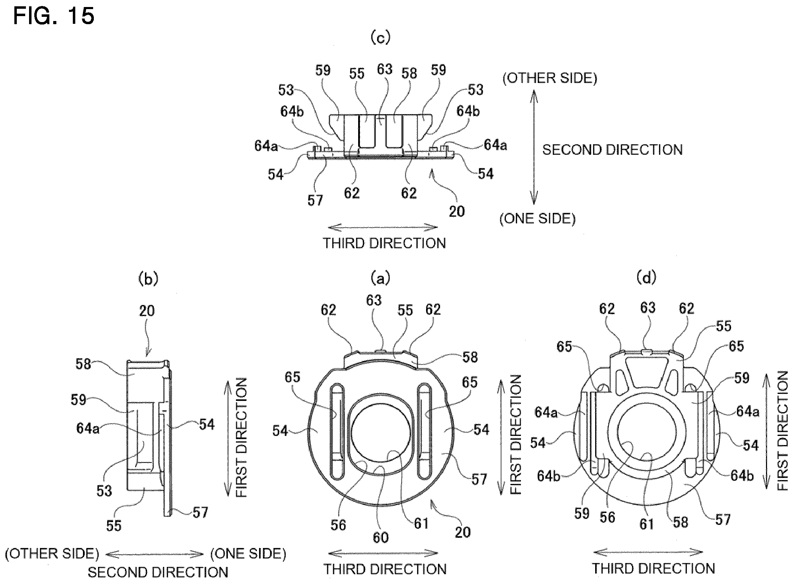

A first example of an embodiment of the technique according to the present disclosure will be described using FIGS. 1 to 17B. Note that in the present example, a worm gear reducer is applied to a pinion assist type electric power steering device. However, any of the worm gear reducers according to one aspect of the present disclosure can be widely applied to worm gear reducers incorporated in column assist type and dual pinion type electric power steering devices, as well as various types of mechanical devices other than electric power steering devices.

FIG. 1 illustrates a pinion assist type electric power steering device 1 incorporating a worm gear reducer 14 of the present example. The electric power steering device 1 includes a steering wheel 2, a steering shaft 3, a steering column 4, a pair of universal joints 5a, 5b, an intermediate shaft 6, a steering gear unit 7, and an electric assist device 8.

The steering wheel 2 is supported and fixed to a rear end portion of the steering shaft 3. The steering shaft 3 is rotatably supported inside the steering column 4 that is supported by a vehicle body. The front end portion of the steering shaft 3 is connected to a pinion shaft 9 of the steering gear unit 7 through a rear side universal joint 5a, an intermediate shaft 6, and a front side universal joint 5b. Therefore, when the driver turns the steering wheel 2, rotation of the steering wheel 2 is transmitted to the pinion shaft 9 through the steering shaft 3, the pair of universal joints 5a, 5b, and the intermediate shaft 6. The rotation of the pinion shaft 9 is converted into linear motion of a rack shaft 10 of the steering gear unit 7 that engages with the pinion shaft 9. As a result, a steering angle according to the amount of rotation of the steering wheel 2 is applied to the pair of steered wheels. The electric assist device 8 applies auxiliary power generated by an electric motor 15 as a power source to the pinion shaft 9. As a result, a force required by the driver to rotate the steering wheel 2 is reduced.

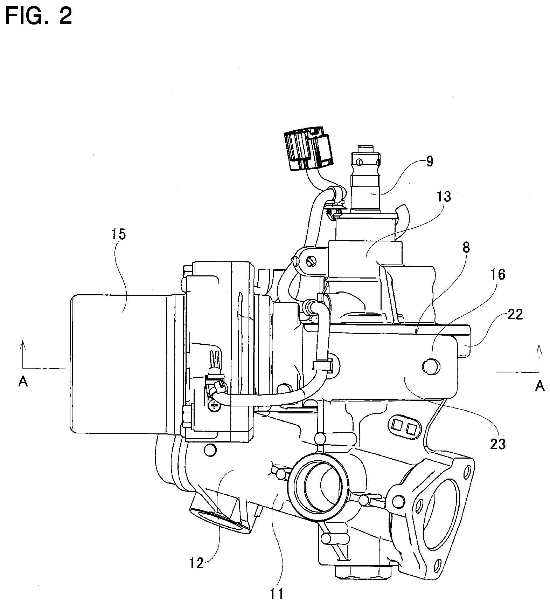

The steering gear unit 7 includes a housing 11 that is supported by and fixed to the vehicle body, the rack shaft 10, and the pinion shaft 9. The housing 11 has a rack housing 12 extending in the vehicle width direction, and a pinion housing 13 connected to a portion on one side in the axial direction of the rack housing 12 (the right side portion in FIG. 1). The central axis of the pinion housing 13 is at a skewed position to the central axis of the rack housing 12. The internal space of the pinion housing 13 communicates with the internal space of the rack housing 12. The rack shaft 10 is supported inside the rack housing 12 so as to be movable only in the axial direction (the vehicle width direction). The pinion shaft 9 is supported inside the pinion housing 13 so as to be capable of only rotation. The pinion shaft 9 has pinion teeth on an outer circumferential surface of a front half portion (lower half portion in FIG. 2) (not illustrated) that is arranged inside the pinion housing 13. A base end portion (upper end portion in FIG. 2) of the pinion shaft 9 protrudes outside the housing 11 and is connected to the front side universal joint 5b. The rack shaft 10 has rack teeth that engage with the pinion teeth of the pinion shaft 9 at a part of the outer circumferential surface of a portion on the one side in the axial direction (right side portion in FIG. 1) (not illustrated) arranged inside the rack housing 12.

The electric assist device 8 includes the worm gear reducer 14 and an electric motor 15. The electric assist device 8 is configured so that the rotation of the electric motor 15 is reduced in speed by the worm gear reducer 14 and transmitted to the pinion shaft 9.

The worm gear reducer 14 includes a housing 16, a worm wheel 17, a worm 18, a holder 19, a pad 20, and an elastic member 21.

The housing 16 has a wheel housing 22 and a worm housing 23 that is arranged at a skewed position to the wheel housing 22 and has an intermediate portion in the axial direction that opens to the wheel housing 22.

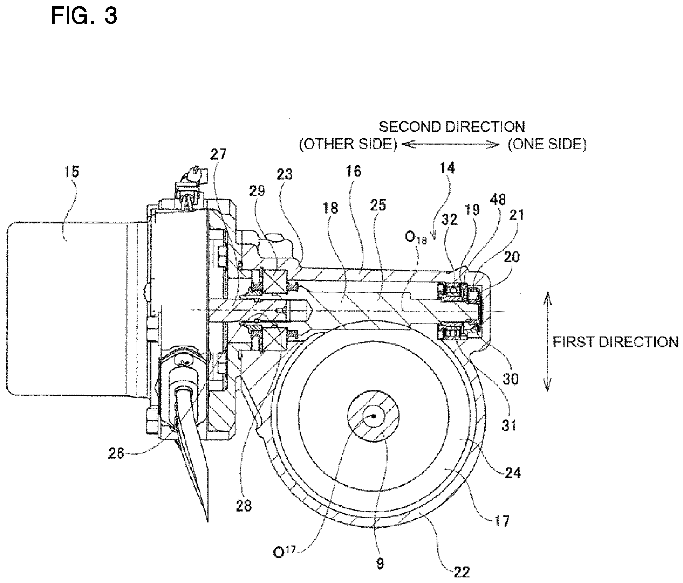

That is, a central axis of the wheel housing 22 and a central axis of the worm housing 23 are arranged at a skewed position to each other. In addition, an intermediate portion in the axial direction of the worm housing 23 is integrally connected to one location in the circumferential direction of an outer end portion in the radial direction of the wheel housing 22, and through this connected portion, an internal space of the worm housing 23 is communicated with an internal space of the wheel housing 22. In the present example, the worm housing 23 has a cylinder shape with a bottom, and specifically, a tip end in the axial direction (right end in FIG. 3) is closed and a base end in the axial direction (left end in FIG. 3) is open.

In the present example, the wheel housing 22 is coaxially and integrally connected to an intermediate portion in the axial direction of the pinion housing 13 of the housing 11 of the steering gear unit 7. The internal space of the wheel housing 22 communicates with the internal space of the pinion housing 13.

The worm wheel 17 has wheel teeth 24 on an outer circumferential surface thereof, and is rotatably supported inside the wheel housing 22. In the present example, the worm wheel 17 is fitted and fixed onto an intermediate portion in the axial direction of the pinion shaft 9.

The worm 18 has worm teeth 25 that engage with the wheel teeth 24 at an intermediate portion in the axial direction of the outer circumferential surface, and is rotatably supported inside the worm housing 23.

In the present example, a base end portion (left end portion in FIG. 3) of the worm 18 is supported by the worm housing 23 so as to be capable of slight oscillating displacement, and is connected to an output shaft 27 of the electric motor 15 so as to be capable of transmitting torque.

For this reason, in the present example, the worm 18 has a female spline portion 26 on an inner circumferential surface of the base end portion. The electric motor 15, in a state in which the output shaft 27 is arranged coaxially with the worm housing 23, is coupled with and fixed to a base end portion in the axial direction of the worm housing 23. The female spline portion 26 of the worm 18 and a male spline portion 28 provided on an outer circumferential surface of the output shaft 27 of the electric motor 15 are engaged with a spline engagement. As a result, the base end portion of the worm 18 and the output shaft 27 of the electric motor 15 are connected to each other so that torque can be transmitted and so that slight oscillating displacement of the worm 18 is possible. The base end portion of the worm 18 is supported by a ball bearing 29 having a radial gap to the worm housing 23 so as to be capable of slight oscillating displacement.

In the present example, the outer circumferential surface of the tip-end portion of the worm 18 is formed as a stepped cylindrical surface. That is, the outer circumferential surface of the tip-end portion of the worm 18 has a small diameter cylindrical surface portion 30 of the tip-end side portion, and a large diameter cylindrical surface portion 31 having a larger diameter than the small diameter cylindrical surface portion 30 of the base end side portion.

In the present example, a support bearing 32 is arranged between the large diameter cylindrical surface portion 31 of the worm 18 and the inner circumferential surface of the worm housing 23. In the illustrated example, the support bearing 32 is a ball bearing. That is, the support bearing 32 has an inner ring 33 having an inner ring raceway on an outer circumferential surface thereof, an outer ring 34 having an outer ring raceway on an inner circumferential surface thereof, and a plurality of balls 35, each of which is a rolling element, arranged between the inner ring raceway and the outer ring raceway. However, as the support bearing 32, a rolling bearing such as a cylindrical roller bearing in which the rolling elements are cylindrical rollers or a tapered roller bearing in which the rolling elements are tapered rollers, or a sliding bearing may also be used.

In the present example, the inner ring 33 is fitted onto the large diameter cylindrical surface portion 31 of the worm 18 with a radial gap therebetween. In addition, in the present example, a cylindrical bushing 36 is arranged between the inner circumferential surface of the inner ring 33 and the large diameter cylindrical surface portion 31. More specifically, the inner ring 33 is fitted onto the outer circumferential surface of the bushing 36 by an interference fit, and the bushing 36 is fitted onto the large diameter cylindrical surface portion 31 of the worm 18 by a clearance fit. Note that the bushing 36 is a member for ensuring sliding properties and/or cushioning properties to the outer circumferential surface of the tip-end portion of the worm 18. Such a bushing 36 is made of a material that has a small coefficient of friction to a metallic material of the worm 18, and preferably is a material such as synthetic resin or a light alloy such as an aluminum alloy. However, the bushing 36 may be omitted, or a bushing that is fitted onto the outer ring 34 with an interference fit may be fitted inside the worm housing 23 with a gap in the radial direction therebetween.

In the present example, the outer ring 34 is fitted into the inside of the worm housing 23 with a clearance fit. Thus, the preload of the support bearing 32 is prevented from changing even in a case in which the housing 16 undergoes thermal expansion during use. However, in a case in which the thermal expansion of the housing does not pose a particular problem, the outer ring can be press-fitted with the housing.

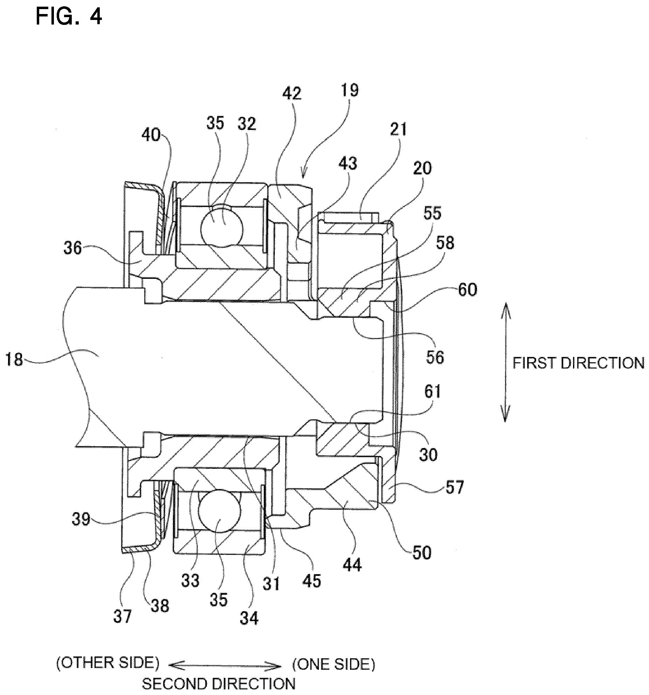

In addition, as will be described below, the outer ring 34 is sandwiched in the axial direction between the holder 19 arranged inside the worm housing 23 and a retainer 37 that is fitted and fixed into the inside the worm housing 23. The retainer 37 has a fitting tubular portion 38 that is fitted and fixed into the inner circumferential surface of the worm housing 23 with an interference fit, and an inward-facing flange portion 39 that is bent inward in the radial direction over the entire circumference from the end portion on one side in the axial direction (the right side in FIGS. 3 and 4) of the fitting tubular portion 38. In the present example, the end surface on the one side in the axial direction of the outer ring 34 abuts against an outside portion in the radial direction of a side surface on the other side in the axial direction (left side in FIGS. 3 and 4) of an annular portion 42 of the holder 19, and a side surface on the other side in the axial direction abuts against a side surface on the one side in the axial direction of the inward-facing flange portion 39 through a wave washer 40. As a result, the support bearing 32 is prevented from being displaced in the axial direction. However, the wave washer 40 may be omitted, or a wave washer may be arranged between the outer ring 34 and the holder 19.

In the present example, the tip-end portion of the worm 18, due to the radial gap that exists between the inner circumferential surface of the inner ring 33 and the outer circumferential surface of the tip-end portion of the worm 18, and more specifically, due to the annular gap that exists between the inner circumferential surface of the bushing 36 and the large diameter cylindrical surface portion 31, is capable of displacement in a first direction (the up-down direction in FIGS. 3 and 4), which is the direction of movement towards and away from the worm wheel 17 and is the direction of the biasing force exerted by the elastic member 21.

In the present example, the support bearing 32 is sandwiched in the axial direction between the holder 19 and the retainer 37; however, in a case of implementing a worm gear reducer according to one aspect of the present disclosure, the arrangement of the support bearing is not particularly limited as long as the support bearing allows the tip-end portion of the worm to rotate relative to the worm housing and to move toward and away from the worm wheel. For example, the holder may be fitted and fixed into the inside the worm housing, and the support bearing may be fitted and held inside the holder.

Note that in the worm gear reducer 14 of the present example, a central axis O₁₇ of the worm wheel 17 and a central axis O₁₈ of the worm 18 (the central axis of the output shaft 27 of the electric motor 15) are perpendicular to each other when viewed from the first direction. However, the present disclosure can also be applied to an oblique-type worm gear reducer in which the central axis O₁₇ of the worm wheel 17 and the central axis O₁₈ of the worm 18 (the central axis of the output shaft 27 of the electric motor 15) intersect obliquely, that is, form an acute angle, when viewed from the first direction.

In the worm gear reducer 14 of the present example, as illustrated in FIGS. 3 to 10, the holder 19, the pad 20, and the elastic member 21 are arranged between the small diameter cylindrical surface portion 30 of the worm 18 and the inner circumferential surface of the tip-end portion of the worm housing 23. The holder 19 is arranged between the tip-end portion of the worm 18 and the worm housing 23. In the present example, the holder 19 is arranged around the tip-end portion of the worm 18 in a state in which rotation is prevented inside the worm housing 23. The pad 20 is fitted onto the tip-end portion of the worm 18. In the present example, the pad 20 is fitted onto the tip-end portion of the worm 18 without any looseness with respect to the radial direction. The elastic member 21 is assembled to the holder 19, and elastically biases the tip-end portion of the worm 18 through the pad 20 toward the worm wheel 17 (the lower side in FIGS. 3 and 4). This prevents backlash at the engaging portion between the wheel teeth 24 and the worm teeth 25.

The holder 19 has two holder inclined surfaces 41, which are two holder-engaging portions, at positions that sandwich the pad 20 from both sides in the third direction (front-rear direction in FIGS. 3 and 4) that is perpendicular to both the first direction and the second direction (left-right direction in FIGS. 3 and 4) that is the axial direction of the worm housing 23. The two holder inclined surfaces 41 respectively extend in the first direction and are inclined in a direction approaching each other as going toward one side in the second direction (right side in FIGS. 3 and 4 in the present example). Note that the holder 19 is made of a material having sufficient strength and rigidity, and, for example, is preferably made of metal material, a high-performance resin material such as polyphenylene sulfide (PPS) mixed with glass fibers, or the like.

In addition, the holder 19 has two holder-pressed surfaces 52 facing the one side in the second direction. The two holder-pressed surfaces 52 are respectively formed of a flat surface perpendicular to the second direction.

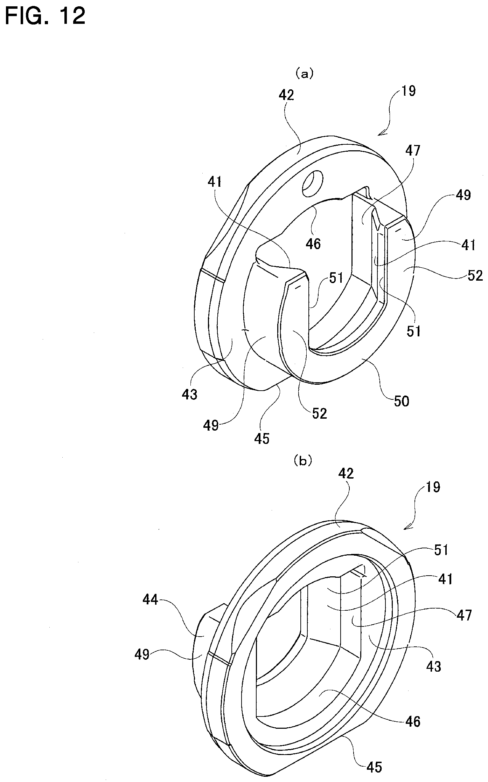

More specifically, in the present example, as illustrated in FIGS. 12A to 13D, the holder 19 includes: an annular portion 42; a roughly circular ring-shaped side plate portion 43 extending inward in the radial direction from an end portion on the one side with respect to the second direction of the annular portion 42; and a protruding portion 44 extending from an inner end portion in the radial direction of the side plate portion 43 toward the one side with respect to the second direction and having a roughly U-shaped end surface shape when viewed from the one side in the second direction.

The annular portion 42 has an end surface shape that is an incomplete circle shape made up of one straight portion and one arc portion when viewed from the one side in the second direction. That is, the annular portion 42 has a flat portion 45 at one location in the circumferential direction on an outer circumferential surface thereof (in this example, an end portion close to the worm wheel 17 with respect to the first direction). In the present example, by non-circularly fitting the annular portion 42 into the inside of the worm housing 23, the holder 19 is held inside the worm housing 23 in a state of being prevented from rotating.

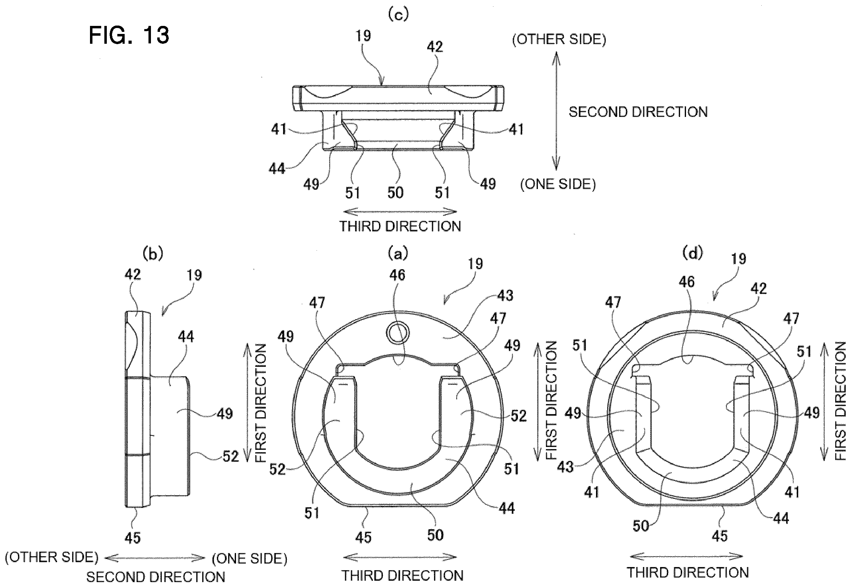

In the present example, as shown in FIG. 13D, the inner circumferential surface 46 of the side plate portion 43 has recessed portions 47 at portions on both sides with respect to the third direction, and the recessed portions 47 are recessed toward both sides in the third direction. The bottom surfaces of the recessed portions 47 are respectively configured by a plane perpendicular to the third direction. Of the inner circumferential surface 46 of the side plate portion 43, portions separated from the two recessed portions 47, that is, portions on both sides with respect to the first direction, are configured by cylindrical surfaces centered on the central axis of the holder 19.

In the present example, by abutting a side surface on the one side in the second direction of an end portion on the outer side in the radial direction of the side plate portion 43 against a stepped portion 48 (see FIG. 3) provided on the inner circumferential surface of the worm housing 23 and facing the other side in the second direction, displacement of the holder 19 to the one side in the second direction is prevented.

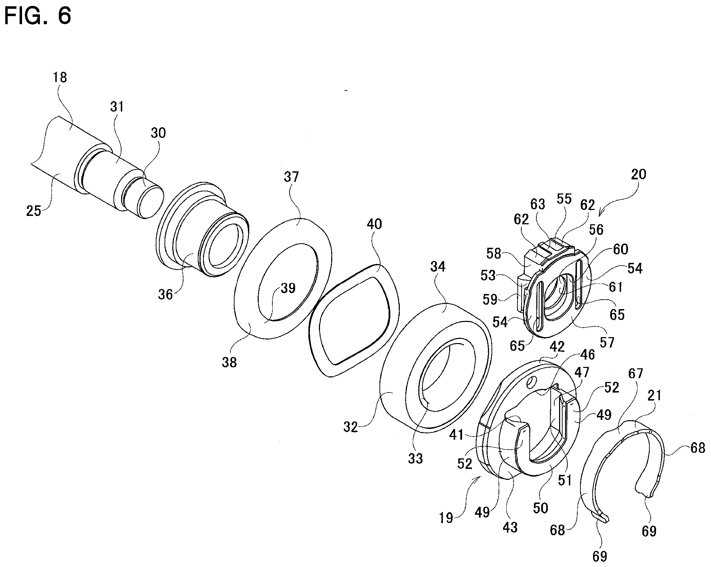

In the present example, the protruding portion 44 protrudes toward the one side in the second direction from a portion of an inner end portion in the radial direction of the side plate portion 43 excluding an end portion on the far side with respect to the first direction from the worm wheel 17. The protruding portion 44 includes two guide portions 49 and a connecting portion 50. The two guide portions 49 constitute the end portions on both sides with respect to the third direction of the protruding portion 44. That is, as shown in FIG. 6, FIG. 12A, FIG. 13A, and FIG. 13D, the two guide portions 49 extend toward the one side in the second direction from two locations of the inner end portion in the radial direction of the side plate portion 43 that are spaced apart in the third direction, and more specifically, from the same locations in the circumferential direction as the two recessed portions 47. The two guide portions 49 have a shape extending in the first direction. The connecting portion 50 constitutes an end portion of the protruding portion 44 that is close to the worm wheel 17 with respect to the first direction. In other words, the connecting portion 50 extends toward the one side in the second direction from the end portion of the inner end portion in the radial direction of the side plate portion 43 that is close to the worm wheel 17 with respect to the first direction, and connects the end portions of the two guide portions 49 that are close to the worm wheel 17 with respect to the first direction. The connecting portion 50 has a partially cylindrical shape centered on the central axis of the holder 19. Note that in a case in which the holder has sufficient strength to prevent the two guide portions from being deformed, the connecting portion may be omitted.

The two holder inclined surfaces 41 of the holder 19 are provided on inner surfaces 51 of the two guide portions 49 that are side surfaces facing each other with respect to the third direction. In the present example, each of the inner surfaces 51 of the two guide portions 49 has a crank shape with a stepped surface (holder inclined surface 41) in an intermediate portion with respect to the second direction, as shown in FIG. 13C, when viewed from the first direction. In other words, the two holder inclined surfaces 41 are provided at intermediate portions with respect to the second direction of the inner surfaces 51 of the two guide portions 49, and more specifically, at portions on the one side in the second direction of the intermediate portions. The two holder inclined surfaces 41 are inclined in directions approaching each other while going toward the one side in the second direction. Portions of the inner surfaces 51 of the two guide portions 49 that are located on the one side in the second direction of the two holder inclined surfaces 41, and portions located on the other side in the second direction of the two holder inclined surfaces 41 are each formed by a plane perpendicular to the third direction. Therefore, the distance between the inner surfaces 51 of the two guide portions 49 is narrower at the portions located on the one side in the second direction of the two holder inclined surfaces 41 than the portions located on the other side in the second direction of the two holder inclined surfaces 41.

In a case of implementing a worm gear reducer according to one aspect of the present disclosure, an inclination angle φ of the holder inclined surface 41 with respect to the second direction can be set to any value within a range of 0° < φ < 90°, but is preferably 20° or more and 80° or less, and more preferably 30° or more and 70° or less. In the present example, the inclination angle φ is set to 30°.

In addition, the two holder-pressed surfaces 52 of the holder 19 are provided on tip-end surfaces that are end surfaces on the one side in the second direction of the two guide portions 49. In the present example, the two holder-pressed surfaces 52 and tip-end surfaces, which are end surfaces on the one side in the second direction of the connecting portion 50, are continuous with each other and exist on the same imaginary plane perpendicular to the second direction.

As shown in FIGS. 6, 10, 11, and 14A to 15D, the pad 20 has two pad inclined surfaces 53, which are two pad-engaging portions that contact the two holder inclined surfaces 41, on both side portions with respect to the third direction, and has two pad elastic pressure plates 54 that are located farther on the one side in the second direction than the two pad inclined surfaces 53, respectively extending from a central portion with respect to the third direction of the pad 20 toward sides separated from each other with respect to the third direction.

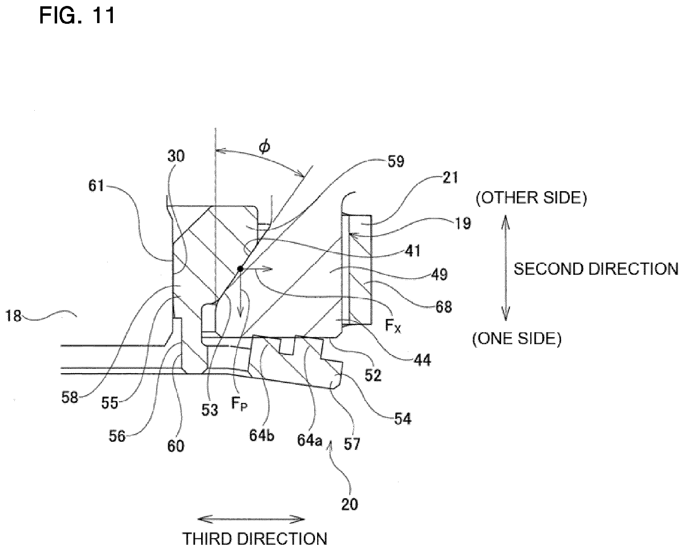

In the present example, the two pad inclined surfaces 53 come in surface contact with the two holder inclined surfaces 41, and more specifically, are inclined in the same direction at the same angle as the two holder inclined surfaces 41 (see FIG. 11).

The pad 20 is made of a material that has a small coefficient of friction to the metallic material of the worm 18, and preferably is made of a material such as synthetic resin or a light alloy such as an aluminum alloy.

Portions with respect to the third direction of side surfaces on the other side with respect to the second direction of the two pad elastic pressure plates 54 of the pad 20 come in contact with the two holder-pressed surfaces 52. As a result, the two holder-pressed surfaces are elastically pressed toward the other side in the second direction, and a preload having components in opposite directions with respect to the third direction is applied to the contact portions between the two holder inclined surfaces 41, which are the holder-engaging portions, and the two pad inclined surfaces 53, which are the pad-engaging portions. The portions with respect to the third direction of the two pad elastic pressure plates 54 come in surface contact with the two holder-pressed surfaces 52, or come in line contact with the two holder-pressed surfaces 52 at least two locations with respect to the third direction.

In the present example, the portions with respect to the third direction of each of the two pad elastic pressure plates 54 come in line contact with each of the two holder-pressed surfaces 52 at least two points with respect to the third direction.

In particular, in the present example, the two pad elastic pressure plates 54 respectively have at least one protrusion 64 extending in the first direction on the side surfaces on the other side with respect to the second direction, and by elastically pressing the two holder-pressed surfaces 52 toward the other side in the second direction with the tip-end portion of the at least one protrusion 64 respectively, a preload is applied to the contact portion between the two holder inclined surfaces 41, which are the holder-engaging portions, and the two pad inclined surfaces 53, which are the pad-engaging portions. That is, in the present example, the tip-end portion of the at least one protrusion 64 constitutes the portions with respect to the third direction of each of the two pad elastic pressure plates 54. The height with respect to the second direction of the at least one protrusion 64 increases continuously or stepwise while going away from the worm 18 with respect to the third direction.

Although not limited thereto, the configuration of the pad 20 of the present example will be described in more detail below. In the present example, the pad 20 includes a base portion 55 arranged between the two guide portions 49, and a through hole 56 that penetrates the base portion 55 in the second direction and through which the tip-end portion of the worm 18 is inserted, and it also has two pad inclined surfaces 53 on both sides with respect to the third direction of the base portion 55, and a flat plate portion 57 including two pad elastic pressure plates 54 and connected to a portion of the base portion 55 that protrudes from between the two guide portions 49 to the one side in the second direction.

The base portion 55 includes a base body 58 and two base extending portions 59.

The base body 58 extends in the first direction and has a substantially rectangular end surface shape. The through hole 56 penetrates in the second direction through a half portion of the base body 58 that is on a side close to the worm wheel 17 with respect to the first direction. **In** the present example, the through hole 56 is configured by a stepped hole having an oval hole portion 60 on the one side with respect to the second direction, and a circular hole portion 61 on the other side with respect to the second direction. Of these, the circular hole portion 61 has an inner diameter slightly larger than an outer diameter of the small diameter cylindrical surface portion 30 of the worm 18.

In addition, the base body 58 has two pressed portions 62 at both end portions in the third direction of a portion on the other side with respect to the second direction at an end portion far from the worm wheel 17 with respect to the first direction. Each of the two pressed portions 62 is configured by a partial cylindrical surface centered on a central axis of the through hole 56. The base body 58 has a pedestal surface portion 63 configured by a flat surface perpendicular to the first direction at an end portion on a side far from the worm wheel 17 with respect to the first direction and at a portion between the two pressed portions 62 with respect to the third direction.

The two base extending portions 59 protrude toward sides apart from each other with respect to the third direction from portions on sides near the worm wheel 17 at a half portion on the other side with respect to the second direction of the base body 58. The two base extending portions 59 respectively extend in the first direction.

In the present example, the two pad inclined surfaces 53 of the pad-engaging portion of the pad 20 are provided on the side surfaces on the one side with respect to the second direction of the two base extending portions 59. The two pad inclined surfaces 53 are inclined in directions approaching each other while going toward the one side in the second direction. The inclination angle φ of the pad inclined surfaces 53 with respect to the second direction is the same as the inclination angle φ of the holder inclined surfaces 41 with respect to the second direction.

The flat plate portion 57 is integrally connected to the end portion on the one side in the second direction of the base body 58, and has a circular outer circumferential shape when viewed from the one side in the second direction. The through hole 56 penetrates in the second direction through the central portion in the radial direction of the flat plate portion 57. Therefore, the flat plate portion 57 is configured in a circular flat plate shape centered on the central axis of the through hole 56. The outer diameter dimension of the flat plate portion 57 is larger than the width dimension with respect to the third direction of the base body 58. The end portions on both sides with respect to the third direction of the flat plate portion 57 protrude further toward both sides in the third direction than the base body 58. An end portion of the flat plate portion 57 on the side close to the worm wheel 17 with respect to the first direction protrudes farther toward the side close to the worm wheel 17 than the base body 58 with respect to the first direction. An end portion of the base body 58 on the side far from the worm wheel 17 with respect to the first direction protrudes farther toward the side far from the worm wheel 17 than the flat plate portion 57 with respect to the first direction.

In the present example, the two pad elastic pressure plates 54 of the pad 20 are connected to portions of the central portion of the pad 20 that protrude to the one side in the second direction from between the two guide portions 49 of the base portion 55. More specifically, the two pad elastic pressure plates 54 are configured by the end portions on both sides of the flat plate portion 57 with respect to the third direction.

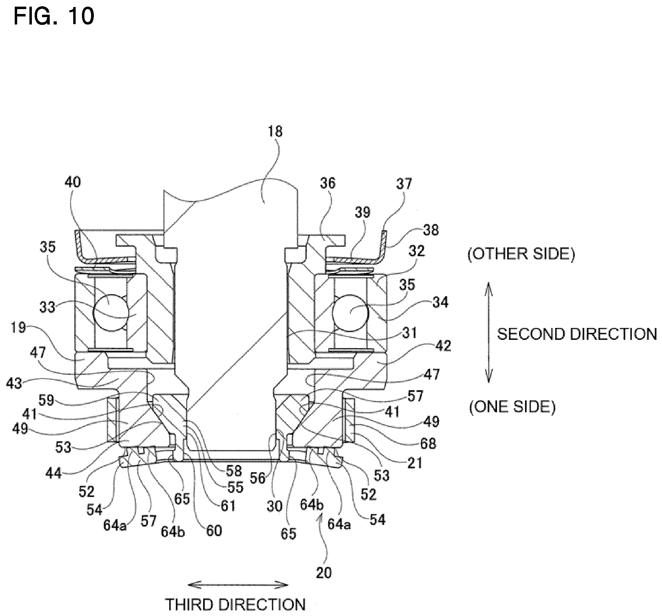

In the present example, each of the two pad elastic pressure plates 54 has at least one protrusion 64 extending in the first direction on the side surface on the other side with respect to the second direction, as shown in FIGS. 10, 11, 14B, and 15B to 15D. The height with respect to the second direction of the at least one protrusion 64 increases continuously or stepwise while going away from the worm 18 with respect to the third direction. The height with respect to the second direction of the at least one protrusion 64 is the height in a free state before the two pad elastic pressure plates 54 are elastically deformed, that is, in a free state before the pad 20 is assembled to the protruding portion 44 of the holder 19. Therefore, in a state in which the two pad elastic pressure plates 54 are elastically deformed after the pad 20 is assembled to the protruding portion 44 of the holder 19, even in a case in which the height with respect to the second direction of the at least one protrusion 64 is the same due to the elastic deformation of the two pad elastic pressure plates 54 including the at least one protrusion 64, it is within the scope of the present disclosure as long as, after the pad 20 is removed, the height with respect to the second direction of the at least one protrusion 64 increases continuously or stepwise while going away from the worm 18 with respect to the third direction.

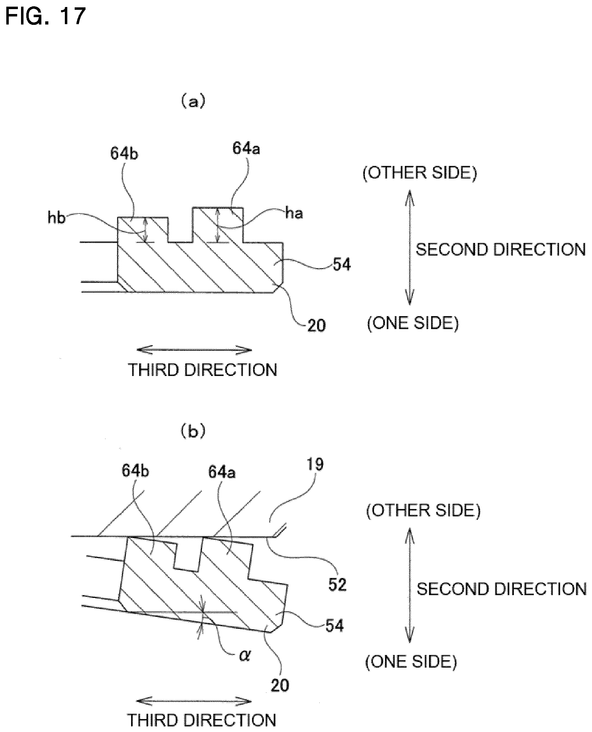

The number of the at least one protrusion 64 may be any number greater than or equal to two, but is preferably two to four. In the present example, the at least one protrusion 64 includes two protrusions 64a, 64b arranged apart from each other in the third direction. As shown in FIG. 17A, of the two protrusions 64a, 64b, the height ha with respect to the second direction of the protrusion 64a that is farther from the worm 18 with respect to the third direction is greater than the height hb with respect to the second direction of the protrusion 64b that is closer to the worm 18 with respect to the third direction.

In the present example, the cross-sectional shape of the tip-end portion of each of the two protrusions 64a, 64b is a straight line perpendicular to the second direction. More specifically, the tip-end portion of each of the two protrusions 64a, 64b is configured by a flat surface that is perpendicular to the second direction. Therefore, in a state in which the pad 20 is assembled to the protruding portion 44 of the holder 19, a contact state between the tip-end portion of the at least one protrusion 64 that corresponds to a portion with respect to the third direction of the other side surface of each of the two pad elastic pressure plates 54, that is, in the present example, the tip-end portion of each of the protrusions 64a, 64b, and each of the holder-pressed surfaces 52 is line contact. The cross-sectional shape of the tip-end portion of the at least one protrusion 64 is also in a free state before the two pad elastic pressure plates 54 are elastically deformed, that is, in a free state before the pad 20 is assembled to the protruding portion 44 of the holder 19. Therefore, in a state in which, after the pad 20 is assembled to the protruding portion 44 of the holder 19, the two pad elastic pressure plates 54 are elastically deformed, even in a case in which the cross-sectional shape of the tip-end portion of the at least one protrusion 64 is deformed due to elastic deformation of the two pad elastic pressure plates 54 including the at least one protrusion 64, any configuration in which the tip-end portion of the at least one protrusion 64 has a shape as defined in the present disclosure after the pad 20 is removed is within the scope of the present disclosure.

Note that the degree to which the height ha with respect to the second direction of the protrusion 64a on the far side from the worm 18 with respect to the third direction is made higher than the height hb with respect to the second direction of the protrusion 64b on the side close to the worm 18 with respect to the third direction (ha-hb) is not particularly limited as long as the respective tip-end portions of the protrusions 64a, 64b can both come in contact with the holder-pressed surfaces 52 when the pad 20 is assembled to the protruding portion 44 of the holder 19; however, in the worm gear reducer 14 incorporated in the electric power steering device 1, it can be, for example, 0.05 mm or more and 0.30 mm or less, and preferably 0.10 mm or more and 0.15 mm or less.

In the present example, each of the two pad elastic pressure plates 54 has a slit 65 that penetrates in the second direction and extends in the first direction at a base end portion that is the end portion on the central side of the pad 20 with respect to the third direction. In the present example, the bending rigidity with respect to the second direction of portions of the base end portion of the pad elastic pressure plate 54 adjacent to both sides of the slit 65 in the longitudinal direction is adjusted by appropriately regulating the width and length of the slit 65, the thickness of the pad elastic pressure plate 54, or the like. However, in a case of implementing a worm gear reducer according to an aspect of the present disclosure, the slit may be omitted.

As shown in FIGS. 3 to 5 and 7 to 10, the pad 20 is assembled to the protruding portion 44 of the holder 19 and is fitted onto the tip-end portion of the worm 18.

More specifically, in a state in which a portion of the base portion 55 of the pad 20 on the side close to the worm wheel 17 with respect to the first direction is arranged between the two guide portions 49 of the protruding portion 44 of the holder 19, the two pad inclined surfaces 53 come in surface contact with the two holder inclined surfaces 41. In addition, the tip-end portions of the protrusions 64a, 64b of the two pad elastic pressure plates 54 elastically press the two holder-pressed surfaces 52 toward the other side in the second direction. As a result, a preload is applied to the contact portions between the two holder inclined surfaces 41 and the two pad inclined surfaces 53.

In a state in which the pad 20 is assembled to the protruding portion of the holder 19, the inclination angle α of each of the two pad elastic pressure plates 54 with respect to a virtual plane perpendicular to the second direction is not particularly limited; however, can be, for example, greater than or equal to 0° and less than or equal to 15°.

Moreover, the small diameter cylindrical surface portion 30 at the tip-end portion of the worm 18 is fitted into the circular hole portion 61 of the through hole 56 of the pad 20 without any looseness in the radial direction and so as to be capable of relative rotation.

In this state, a gap in the first direction exists between the side surface of the base portion 55 of the pad 20 on the side close to the worm wheel 17 with respect to the first direction and the side surface of the connecting portion 50 of the protruding portion 44 of the holder 19 on the side far from the worm wheel 17 with respect to the first direction. In the present example, the pad 20 is capable of displacement in the first direction relative to the holder 19 due to this gap in the first direction.

Furthermore, in this state, as shown in FIGS. 10 and 11, gaps with respect to the third direction exist between both the portions located farther on the one side in the second direction than the two holder inclined surfaces 41 and the portions located farther on the other side in the second direction than the two folder inclined surfaces 41 of the inner surfaces 51 of the two guide portions 49, and the base portion 55 of the pad 20. In the present example, the pad 20 is capable of displacement in the third direction relative to the holder 19 due to these gaps in the third direction.

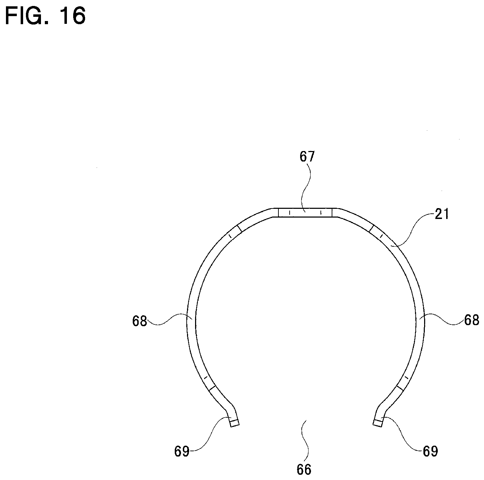

In the present example, the elastic member 21 is formed of a leaf spring. More specifically, in the present example, the elastic member 21 is formed of a partially cut cylindrical shape leaf spring having a discontinuous portion 66 at one location in the circumferential direction, as shown in FIGS. 6 and 16. More specifically, the elastic member 21 has a base portion 67 located on a side far from the worm 18 with respect to the first direction, and two arm portions 68 extending toward the circumferential direction from end portions on both sides in the circumferential direction of the base portion 67.

In the present example, the base portion 67 is configured by a flat plate perpendicular to the first direction.

Each of the two arm portions 68 is configured to have a partial cylindrical shape. Each of the two arm portions 68 has a bent portion 69 that is bent outward in the radial direction from the tip-end portion.

However, in a case of implementing the worm gear reducer according to an aspect of the present disclosure, the elastic member may have any configuration as long as it is possible to elastically bias the pad toward the worm wheel 17 with respect to the first direction. For example, in a case in which the elastic member is configured by a leaf spring, the elastic member may have a shape other than a partially cut cylindrical shape. In addition, the elastic member may also be configured by a torsion coil spring.

The elastic member 21 is assembled to the holder 19 so as to fit onto the base portion 55 of the pad 20 and the two guide portions 49. In the present example, in a state in which the base portion 55 of the pad 20 and the protruding portion 44 of the holder 19 are inserted inward in the radial direction of the elastic member 21, the base portion 67 of the elastic member 21 is abutted against the pedestal surface portion 63 of the pad 20, and the inner circumferential surfaces of portions on the base end side of the two arms 68 are elastically pressed against the two pressed portions 62, and the inner circumferential surfaces of portions on the tip-end side of the two arm portions 68 are elastically pressed against the side surface of the connecting portion 50 of the protruding portion 44 of the holder 19 on the side close to the worm wheel 17 with respect to the first direction. As a result, the tip-end portion of the worm 18 is elastically biased through the pad 20 toward the worm wheel 17, or in other words, toward the side close to the worm wheel 17 with respect to the first direction. This prevents backlash at the engaging portion between the wheel teeth 24 and the worm teeth 25.

According to the worm gear reducer 14 of the present example, the following advantageous effects can be obtained.

The two pad inclined surfaces 53 of the pad 20 come in surface contact with the two holder inclined surfaces 41 of the holder 19. In addition, the tip-end portions of the protrusions 64a, 64b of the two pad elastic pressure plates 54 of the pad 20 elastically press the two holder-pressed surfaces 52 of the holder 19 toward the other side in the second direction. As a result, a preload is applied to the contact portions between the two holder inclined surfaces 41 and the two pad inclined surfaces 53. Therefore, due to contact between the two holder inclined surfaces 41 and the two pad inclined surfaces 53, the displacement of the pad 20 in the third direction relative to the holder 19 is regulated, and the pad 20 can be prevented from being loose without resistance in the third direction relative to the holder 19.

More specifically, in this example, as shown in FIGS. 10 and 11, the tip-end portions of the protrusions 64a, 64b of the pad elastic pressure plate 54 elastically press the holder-pressed surfaces 52 toward the other side in the second direction, and an elastic force (preload force) Fp directed toward the one side with respect to the second direction acts from the pad inclined surface 53 to the holder inclined surface 41. Then, this elastic force Fp is converted into an elastic force (preload force) Fx acting from the pad inclined surface 53 to the holder inclined surface 41 and directed outward with respect to the third direction. In the configuration of the present example, due to the elastic force Fx, it is possible to prevent the pad 20 from being loose without resistance in the third direction relative to the holder 19.

Therefore, even when the direction of a component with respect to the third direction of the reaction force applied from the wheel teeth 24 to the worm teeth 25 changes as the direction of the rotational direction of the worm 18 changes, the tip-end portion of the worm 18 is less likely to be displaced in the third direction. As a result, abnormal noises such as teeth rattling at the engaging portion between the wheel teeth 24 and the worm teeth 25 and abnormal noises such as collision noise between the pad 20 and the holder 19 can be prevented.

In a case of implementing a worm gear reducer according to an aspect of the present disclosure, the bending rigidity with respect to the second direction of the portions of the base end portion of the pad elastic pressure plate 54 adjacent to both sides in the longitudinal direction of the slit 65 can be changed by changing the width and length of the slit 65, the thickness of the pad elastic pressure plate 54, the second direction height of the at least one protrusion 64 (protrusions 64a, 64b), or the like. As a result, it is possible to change the magnitude of the force with which the tip-end portion of the at least one protrusion 64 (protrusions 64a, 64b) of each of the pad elastic pressure plates 54 elastically presses the holder-pressed surface 52 toward the other side in the second direction. Accordingly, the magnitude of the elastic force Fp can be changed arbitrarily.

The pad elastic pressure plate 54 locally presses the holder-pressed surface 52 with the tip-end portion of the at least one protrusion 64 (protrusions 64a, 64b). Therefore, the pressing force can be stabilized compared to a case in which the pad elastic pressure plate presses the holder-pressed surface so as to press the surface over a wide area.

The elastic force Fx and the elastic force Fp are related by the equation "Fx=Fp/tan φ". In the present example, since the inclination angle φ=30°, Fx=Fp/tan 30°=1.7 Fp. That is, the elastic force Fx is greater than the elastic force Fp. In a case of implementing a worm gear reducer according to one aspect of the present disclosure, the magnitude of the elastic force Fx can be changed arbitrarily by changing not only the magnitude of Fp but also the magnitude of the inclination angle φ. For example, when φ=45°, then Fx=Fp can be satisfied; when 45°<φ<90°, then Fx<Fp can be satisfied; and when 0°<φ<45°, then Fx>Fp can be satisfied. Furthermore, the magnitude of the elastic force Fx can be adjusted by changing the inclination angle φ without changing the material of the pad 20 (the elastic force based on the material). Therefore, the magnitude of the elastic force Fx can be easily adjusted in the design stage.

Note that in a case of implementing a worm gear reducer according to one aspect of the present disclosure, the inclination angle of the holder inclined surface 41 with respect to the second direction and the inclination angle of the pad inclined surface 53 with respect to the second direction do not need to be strictly identical, and may differ within a range of manufacturing error. In addition, the inclination angle of the holder inclined surface 41 with respect to the second direction can be made slightly (for example, about 0.5°) smaller than the inclination angle of pad inclined surface 53 with respect to the second direction. In this way, at a contact portion between the holder inclined surface 41 and the pad inclined surface 53, the tip-end portion of the pad inclined surface 53 (the end portion on the right side in the third direction in FIG. 11, and the end portion on the other side in the second direction in FIG. 11) comes into particularly strong surface contact with the holder inclined surface 41. As a result, the position of the pad 20 relative to the holder 19 becomes stable.

A case will be considered in which, from a neutral state in which the central axis of the holder 19 and the central axis of the pad 20 are aligned with each other as shown in FIGS. 10 and 11 when viewed from the first direction, the pad 20 is displaced to one side in the third direction relative to the holder 19, for example, to the right side in FIGS 10 and 11. In this case, as the pad inclined surface 53 on the right side slides and is displaced along the holder inclined surface 41 on the right side, the base portion 55 of the pad 20 is displaced toward the other side with respect to the second direction, and at the same time, the pad elastic pressure plate 54 on the right side elastically deforms so as to tilt to the one side with respect to the second direction. Then, as the elastic pressing force acting on the holder-pressed surface 52 on the right side from the pad elastic pressure plate 54 on the right side increases by an amount corresponding to the amount of the elastic deformation, the elastic forces Fp and Fx increase accordingly. As a result, the pad 20 becomes less likely to be displaced toward the right side. The same applies to a case in which the pad 20 is displaced from the neutral state to the left side in FIGS. 10 and 11 relative to the holder 19.

The inner circumferential surface of the central portion in the circumferential direction of the elastic member 21 is elastically pressed against the two pressed portions 62 provided at the end portions on both sides in the third direction of the base body 58 of the pad 20. Therefore, a force applied to the two pressed portions 62 has not only a component in a direction toward the worm wheel 17 with respect to the first direction, but also a component in opposite directions with respect to the third direction. From this aspect as well, it is possible to prevent the tip-end portion of the worm 18 from being displaced in the third direction when the rotation direction of the worm 18 changes.

In particular, in the present example, the height with respect to the second direction of the at least one protrusion 64 provided on each of the two pad elastic pressure plates 54 increases continuously or stepwise while moving away from the worm 18 with respect to the third direction. More specifically, of the two protrusions 64a, 64b, the height ha with respect to the second direction of the protrusion 64a that is on the side far from the worm 18 with respect to the third direction is higher than the height hb with respect to the second direction of the protrusion 64b that is on the side close to the worm 18 with respect to the third direction. Therefore, it is possible to stably prevent the tip-end portion of the worm 18 from being displaced in the third direction when the rotation direction of the worm 18 changes. The reason for this will be explained with reference to FIGS. 17A and FIG. 17B.

When the pad 20 is assembled to the protruding portion 44 of the holder 19 and the tip-end portions of the protrusions 64a, 64b of the two pad elastic pressure plates 54 are elastically abutted against the two holder-pressed surfaces 52 of the holder 19, the two pad elastic pressure plates 54 elastically deform so as to tilt in a direction toward the one side in the second direction while moving away from the worm 18 with respect to the third direction, centered on their respective base end portions.

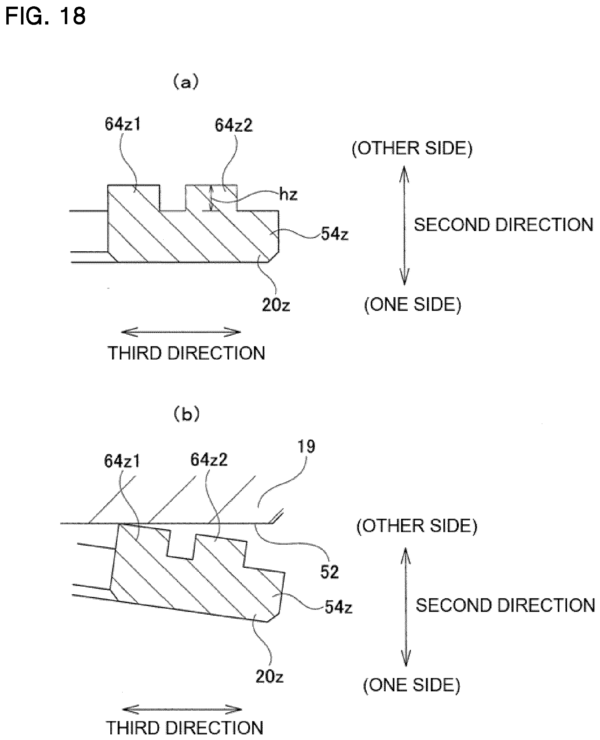

FIGS. 18A and 18B illustrate a reference example for the first example. In the reference example, heights hz with respect to the second direction of two protrusions 64z1, 64z2 provided on each of two pad elastic pressure plates 54z are the same. In a case in which the pad 20z of this kind of reference example is assembled to the protruding portion 44 of the holder 19, there is a possibility that only the tip-end portion of the protrusion 64z1 on the side close to the worm 18 with respect to the third direction will come in contact with the holder-pressed surface 52, and that the tip-end portion of the protrusion 64z2 on the side far from the worm 18 with respect to the third direction will not come in contact with the holder-pressed surface 52. Therefore, it may become impossible to stabilize the elastic deformation of the pad elastic pressure plate 54z, or the surface pressure at the contact portion between the tip-end portion of the protrusion 64z1 on the side close to the worm 18 with respect to the third direction and the holder-pressed surface 52 may become excessive, resulting in wear at the contact portion. As a result, it may become impossible to stabilize the elastic forces Fx and Fp generated when the tip-end portions of the protrusions 64z1 and 64z2 elastically press the holder-pressed surfaces 52 toward the other side in the second direction.

On the other hand, in the present example, the height ha with respect to the second direction of the protrusion 64a on the side far from the worm 18 with respect to the third direction is made higher than the height hb with respect to the second direction of the protrusion 64b on the side close to the worm 18 with respect to the third direction. Therefore, in a state in which the pad 20 is assembled to the protruding portion 44 of the holder 19, the tip-end portions of the two protrusions 64a, 64b can be brought into reliable contact with the holder-pressed surfaces 52 as shown in FIG. 17B. Therefore, the elastic deformation of the pad elastic pressure plates 54 can be stabilized, and the surface pressure at the contact portions between the tip-end portions of the protrusions 64a, 64b and the holder-pressed surfaces 52 can be prevented from becoming excessive, thereby preventing wear from occurring at the contact portions. As a result, the elastic forces Fx, Fp due to the tip-end portions of the protrusions 64a, 64b elastically pressing the holder-pressed surfaces 52 toward the other side in the second direction can be stabilized, and displacement of the tip-end portion of the worm 18 in the third direction when the rotational direction of the worm 18 changes can be stably prevented.

In addition, with the worm gear reducer 14 of the present example, grease can be retained between the two protrusions 64a, 64b provided on each of the two pad elastic pressure plates 54 to lubricate the contact portions between the tip-end portions of the protrusions 64a, 64b and the holder-pressed surfaces 52. Therefore, a lubricated state of the contact portions between the tip-end portions of the protrusions 64a, 64b and the holder-pressed surfaces 52 can be maintained in a good state for a long period of time. From this aspect as well, wear at the contact portions between the tip-end portions of the protrusions 64a, 64b and the holder-pressed surfaces 52 can be prevented.

Note that in the present example, the number of protrusions 64a, 64b provided on each of the two pad elastic pressure plates 54 is two; however, in a case of implementing a worm gear reducer according to one aspect of the present disclosure, the number of protrusions provided on each of the two pad elastic pressure plates can be three or more, or can be one. In a case in which the number of protrusions provided on each of the two pad elastic pressure plates is one, the tip-end portion of the protrusion is configured as an inclined surface that is inclined in a direction toward the other side in the second direction while going away from the worm with respect to the third direction. As a result, the contact area between the tip-end portion of the protrusion and the holder-pressed surface can be increased, and it is possible to prevent elastic deformation of the pad elastic pressure plate from becoming unstable and to prevent the tip-end portion of the protrusion from becoming worn.

### [Second Example]

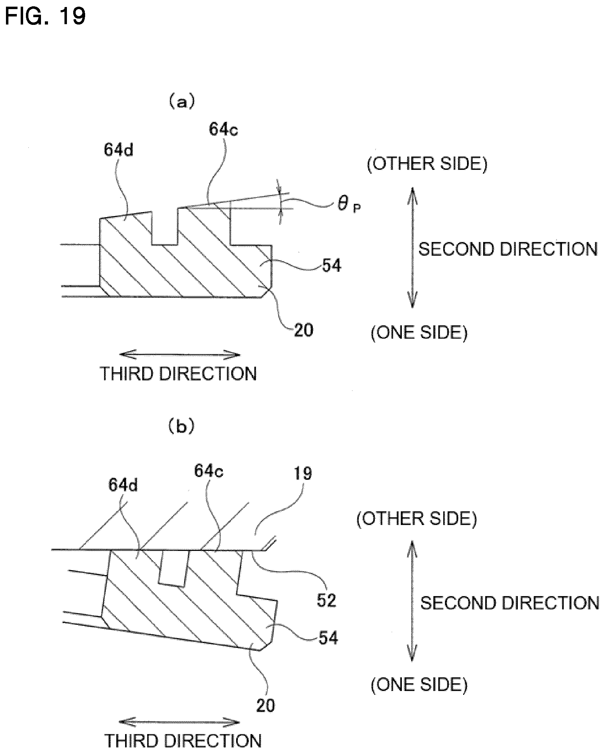

A second example of an embodiment of the technique according to the present disclosure will be described with reference to FIG. 19A and FIG. 19B.

In the present example, the tip-end portion of the at least one protrusions 64, which correspond to portions with respect to the third direction of side surfaces on the other side of each of the two pad elastic pressure plates 54, come in surface contact with each of the two holder-pressed surfaces 52 at least one location with respect to the third direction. That is, in a state in which the pad 20 is assembled to the protruding portion 44 of the holder 19, the tip-end portions of the protrusions 64a, 64b of the two pad elastic pressure plates 54 come into surface contact with the holder-pressed surfaces 52.

More specifically, in the present example, the tip-end portion of each of the two protrusions 64c, 64d provided on each of the two pad elastic pressure plates 54 is configured with an inclined surface that is inclined in a direction toward the other side in the second direction while going away from the worm 18 with respect to the third direction. In the present example, the cross-sectional shape of the tip-end portion of each of the two protrusions 64c, 64d is a straight line that extends in a direction toward the other side in the second direction while going away from the worm 18 with respect to the third direction.

With the worm gear reducer of the present example, it is possible to more effectively prevent the elastic deformation of the pad elastic pressure plates 54 from becoming unstable and the tip-end portions of the protrusions 64c, 64d from becoming worn.

That is, in the first example, the tip-end portions of the two protrusions 64a, 64b provided on each of the two pad elastic pressure plates 54 are configured by flat surfaces perpendicular to the second direction. Therefore, in a state in which the pad 20 is assembled to the protruding portion 44 of the holder 19, as shown in FIG. 17B, of the tip-end portions of the protrusions 64a, 64b, only the tip-end portion that is on the side close to the worm 18 with respect to the third direction comes in contact with the holder-pressed surface 52. In other words, the contact state between the tip-end portions of the protrusions 64a, 64b and the holder-pressed surfaces 52 is line contact.

On the other hand, in the present example, the tip-end portions of the two protrusions 64c, 64d are configured by inclined surfaces that, in a free state, are inclined in a direction toward the other side in the second direction while going away from the worm 18 with respect to the third direction. Therefore, in a state in which the pad 20 is assembled to the protruding portion 44 of the holder 19, the tip-end portions of the protrusions 64c, 64d can be brought into surface contact with the holder-pressed surfaces 52, as shown in FIG. 19B. As a result, the contact area between the tip-end portions of the protrusions 64c, 64d and the holder-pressed surfaces 52 can be made larger than in the first example, and it is possible to more effectively prevent the elastic deformation of the pad elastic pressure plates 54 from becoming unstable and the tip-end portions of the protrusions 64c, 64d from wear.

Note that the inclination angle θₚ of the tip-end portion of each of the two protrusions 64c, 64d with respect to a virtual plane perpendicular to the second direction is not particularly limited as long as the tip-end portion of each of the protrusions 64c, 64d can be brought into surface contact with the holder-pressed surface 52 when the pad 20 is assembled to the protruding portion 44 of the holder 19, and can be, for example, 3° or more and 10° or less, and preferably 5° or more and 8° or less. Moreover, the inclination angles θₚ of the tip-end portions of the two protrusions 64c, 64d may be the same as each other or may be different from each other.

The configuration and the effects of the other parts of the second example are similar to those of the first example.

### [Third Example]

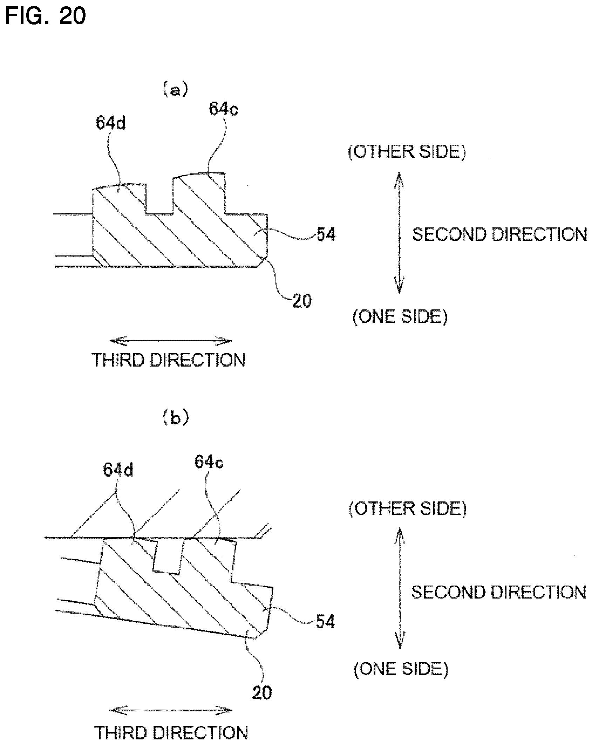

A third example of an embodiment of the technique according to the present disclosure will be described with reference to FIG. 20A and FIG. 20B.

In the present example, the cross-sectional shape of the tip-end portion of each of the two protrusions 64c, 64d is an arc shape that extends in a direction toward the other side in the second direction while going away from the worm 18 with respect to the third direction.

The configuration and the effects of the other parts of the third example are similar to those of the first and second examples.

### [Fourth Example]

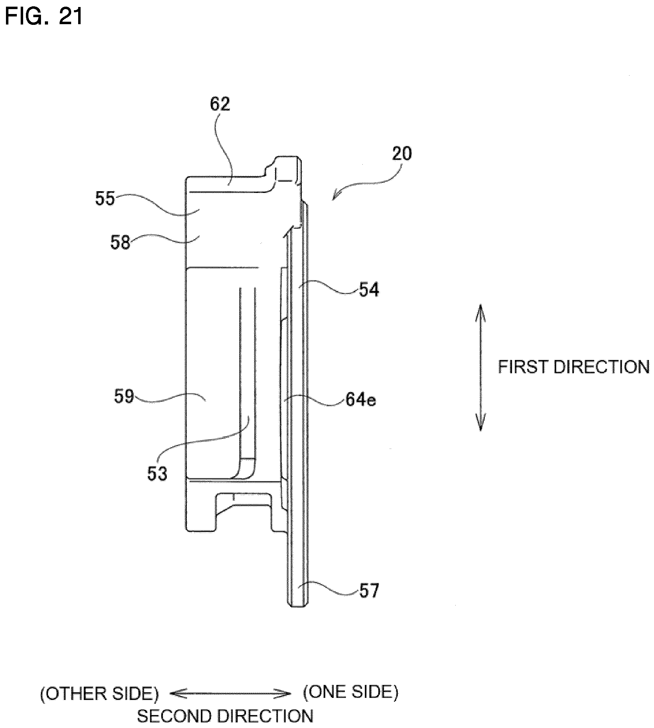

A fourth example of an embodiment of the technique according to the present disclosure will be described using FIGS. 21 to 22B.

In the present example, the height with respect to the second direction of the at least one protrusion 64 provided on each of the two pad elastic pressure plates 54 decreases from the central portion toward both sides with respect to the first direction. That is, the cross-sectional shape of the tip-end portion of the at least one protrusion 64 with respect to an imaginary plane perpendicular to the second direction is configured to be an arc shape.

More specifically, in the present example, the height with respect to the second direction of each of the two protrusions 64e provided on each of the two pad elastic pressure plates 54 decreases from the central portion toward both sides in the first direction. That is, the tip-end portion of each of the protrusions 64e is configured with an arc-shaped curved surface that is curved so as to be convex on the other side in the second direction when viewed from the third direction. Note that the height in the second direction of the at least one protrusion 64 (each of the two protrusions 64e) is in a free state before the two pad elastic pressure plates 54 are elastically deformed, or in other words, in a free state before the pad 20 is assembled to the protruding portion 44 of the holder 19. Therefore, even in a case in which the two pad elastic pressure plates 54 including the at least one protrusion 64 (two protrusions 64e) are elastically deformed in a state in which they are elastically deformed after the pad 20 is assembled to the protruding portion 44 of the holder 19, and the height with respect to the second direction of the at least one protrusion 64 fluctuates (the height is approximately the same with respect to the first direction), is within the scope of the present disclosure in a case in which, after the pad 20 is removed, the height with respect to the second direction of the at least one protrusion 64 decreases from the central portion toward both sides in the first direction.

With to the worm gear reducer of the present example, it is possible to effectively prevent the elastic deformation of the pad elastic pressure plates 54 from becoming unstable and the tip-end portions of the protrusions 64e from becoming worn.

That is, in the structure of the present example, each pad elastic pressure plate 54 has a slit 65 in an intermediate portion in the first direction at the base end portion, and thus the rigidity of the end portions on both sides in the first direction is higher than the rigidity of the intermediate portion in the first direction. Therefore, in a case in which the height with respect to the second direction of the protrusion is constant across the first direction, in a state in which the pad is assembled to the holder, the surface pressure at the contact portion between the tip-end portion of the protrusion and the holder-pressed surface tends to be large at the end portions on both sides with respect to the first direction.

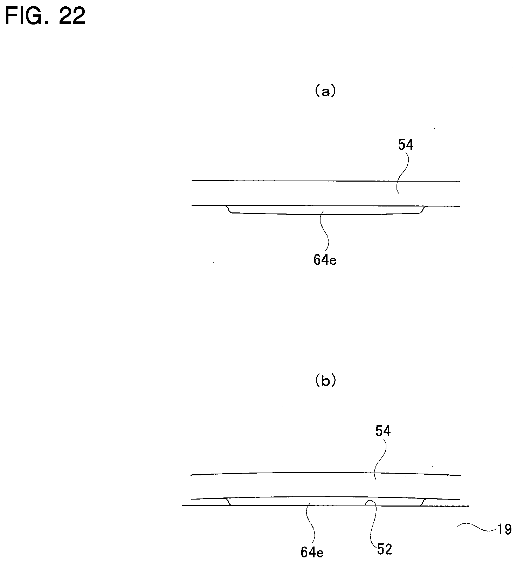

However, in the present example, the height with respect to the second direction of each of the protrusions 64e in the free state decreases going from the central portion toward both sides with respect to the first direction. Therefore, in a state in which the pad 20 is assembled to the protruding portion 44 of the holder 19, each of the two pad elastic pressure plates 54 is curved in an arc shape so that the one side in the second direction is convex, as shown in FIG. 22B. As a result, the surface pressure at the contact portions between each tip-end portion of the protrusions 64e and the holder-pressed surfaces 52 is prevented from becoming excessive at the end portions on both sides with respect to the first direction, while allowing each tip-end portion of the protrusions 64e to stably come in contact with the holder-pressed surfaces 52 with respect to the first direction. Therefore, it is possible to effectively prevent the elastic deformation of the pad elastic pressure plates 54 from becoming unstable and to prevent the tip-end portions of the protrusions 64e from becoming worn.

The configuration and effects of the other parts of the fourth example are similar to those of the first example.

### [Fifth Example]

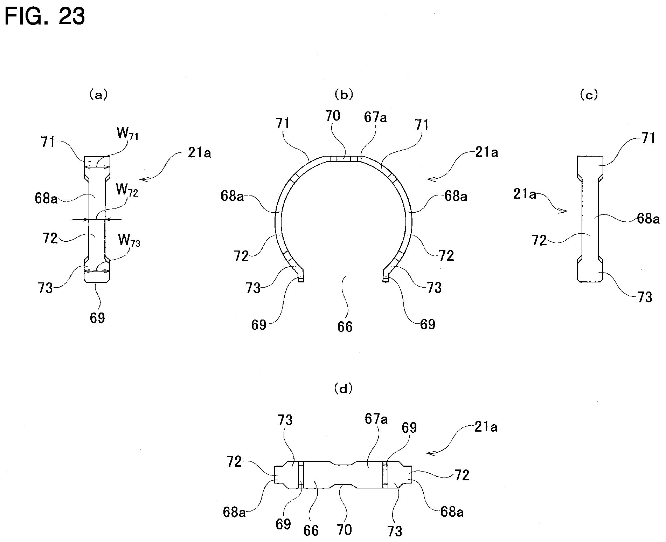

A fifth example of an embodiment of the technique according to the present disclosure will be described with reference to FIGS. 23A to 24C. The worm gear reducer of the present example differs from the worm gear reducer 14 of the first example in the configuration of the elastic member 21a. The configuration and the effects of the other parts are similar to those of the worm gear reducer 14 of the first example.

As illustrated in FIGS. 23A to 23D, the elastic member 21a is configured by a partially cut cylindrical shape (substantially C-shaped) leaf spring having a discontinuous portion 66 at one location in the circumferential direction. In the present example, the elastic member 21a has a base portion 67a located on the side far from the worm 18 with respect to the first direction, and two arm portions 68a extending toward the circumferential direction from end portions on both sides in the circumferential direction of the base portion 67a.

In the present example, the base portion 67a is configured by a flat plate perpendicular to the first direction. The base portion 67a has a constricted portion 70 in an intermediate portion with respect to the third direction, and the constricted portion 70 has a width dimension with respect to the second direction smaller than that of portions on both sides with respect to the third direction. However, the constricted portion 70 may be omitted.

Each of the two arm portions 68a is configured to have a partial cylindrical shape. In the present example, each of the two arm portions 68a has, in order from the side close to the base portion 67a with respect to the circumferential direction, a base-side wide portion 71, a narrow portion 72, and a tip-end-side wide portion 73. In the present example, a width dimension W₇₁ with respect to the second direction of the base side wide portion 71 and a width dimension W₇₃ with respect to the second direction of the tip-end-side wide portion 73 are the same as each other, and a width dimension W₇₂ with respect to the second direction of the narrow portion 72 is smaller than the width dimension W₇₁ with respect to the second direction of the base-side wide portion 71 and the width dimension W₇₃ with respect to the second direction of the tip-end-side wide portion 73 (W₇₂ < W₇₁ = W₇₃).

Note that, in the present example, each of the two arm portions 68a has a bent portion 69 that is bent outward in the radial direction from the tip-end portion of the tip-end-side wide portion 73. A width dimension of the bent portion 69 with respect to the second direction is the same as the width dimension W₇₃ with respect to the second direction of the tip-end-side wide portion 73. However, the bent portion 69 may be omitted.

The elasticity of the elastic member 21a can be adjusted by adjusting the width dimension W₇₂ with respect to the second direction of the narrow portion 72 of each of the two arm portions 68a. In other words, in the worm gear reducer of the present example, by adjusting the width dimension W₇₂ with respect to the second direction of the narrow portion 72, a force with which the elastic member 21a elastically biases the tip-end portion of the worm 18 toward the worm wheel 17 through the pad 20 can be appropriately adjusted. As a result, the occurrence of backlash at the engaging portion between the wheel teeth 24 and the worm teeth 25 can be suppressed, and the occurrence of abnormal noise can be suppressed while an unnecessary increase in friction at the engaging portion can be suppressed.

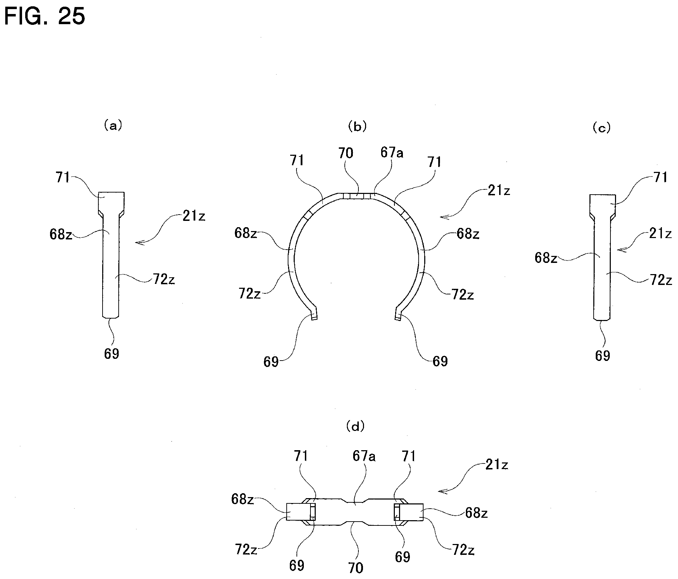

In addition, according to the present example, the elastic member 21a can be easily handled. The reason for this will be explained with reference to FIGS. 25A to 26C in addition to FIGS. 23A to 24C.

FIGS. 25A to 26C illustrate a reference example for the fifth example. In the reference example, each of two arm portions 68z of an elastic member 21z has, in order from the side close to the base portion 67a with respect to the circumferential direction, only the base-side wide portion 71 and a narrow portion 72z, and does not have the tip-end-side wide portion 73. The elasticity of the elastic member 21z of the reference example can also be adjusted by adjusting the width dimension with respect to the second direction of the narrow width portion 72z.

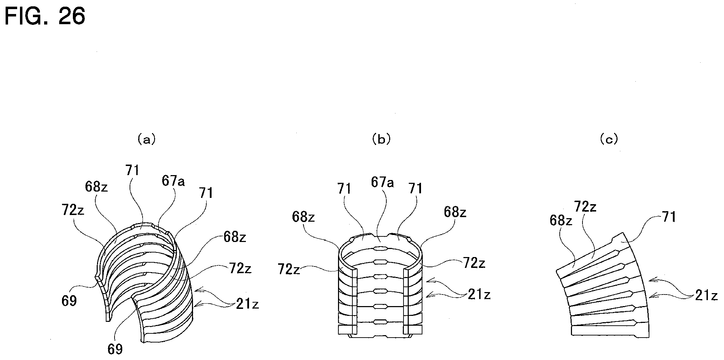

In the elastic member 21z of the reference example, a width dimension with respect to the second direction of the narrow width portion 72z is smaller than the width dimension with respect to the second direction of the base-side wide portion 71. Therefore, when a plurality of elastic members 21z are stacked in the axial direction, they tend to tilt toward the discontinuous portion 66 as shown in FIGS. 26A to 26C, making handling difficult.

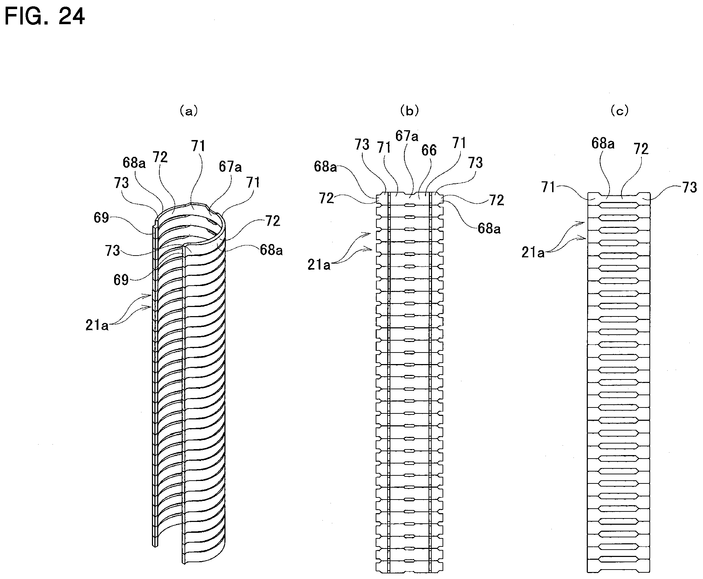

In contrast, in the present example, each of the two arm portions 68a of the elastic member 21a has the base-side wide portion 71 and the tip-end-side wide portion 73 at portions adjacent to both sides in the circumferential direction of the narrow portion 72, and the arm portions 68a have the same width dimensions W₇₁, W₇₃ with respect to the second direction. Therefore, as illustrated in FIGS. 24A to 24C, even when a plurality of elastic members 21a are stacked in the axial direction, tilting can be prevented, thereby ensuring easy handling of the elastic members 21a. Therefore, for example, it is easy to perform so-called rod-wrap packaging in which a plurality of elastic members 21a are wrapped around the periphery while in a state of overlapping in the axial direction. Additionally or alternatively, the elastic members 21a may be easily set in a parts alignment and supply device while in a state of overlapping in the axial direction.

Each elastic member 21a of the present example has a base portion 67a configured by a flat plate, and the base portion 67a has a constricted portion 70 at an intermediate portion with respect to the third direction. Therefore, it is easy to align the phase with respect to the circumferential direction of the elastic member 21a to the protruding portion 44 of the holder 19. However, phase alignment of the elastic member with respect to the holder can be performed by any arbitrary method such as displaying a mark. In that case, the base portion can be configured so as to have a partial cylindrical shape, and/or the constricted portion may be omitted.

The configuration and the effects of the other parts of the fifth example are similar to those of the first example.

### [Sixth Example]

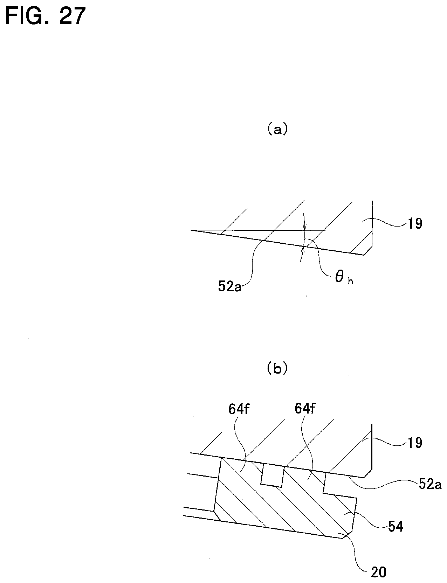

A sixth example of an embodiment of the technique according to the present disclosure will be described with reference to FIG. 27A and FIG. 27B. In the present example, a worm gear reducer is applied to a pinion-assist type electric power steering device. The worm gear reducer of the present example differs from the worm gear reducer 14 of the first example in the construction of the portion that elastically presses the two holder-pressed surfaces 52a of the holder 19 toward the other side in the second direction by the two pad elastic pressure plates 54 of the pad 20. The configuration and the effects of the other parts are similar to those of the worm gear reducer 14 of the first example.

In the present example, one of the two holder-pressed surfaces 52, 52a of the holder 19 and the portions of the two pad elastic pressure plates 54 pressing the two holder-pressed surfaces 52, 52a is configured by an inclined surface that is inclined in a direction that approaches the other of the two holder-pressed surfaces 52, 52a and the portions of the two pad elastic pressure plates 54 pressing the two holder-pressed surfaces 52, 52a with respect to the second direction while going away from the worm 18 with respect to the third direction.

In the present example, the two holder-pressed surfaces 52a are configured by inclined surfaces that are inclined in a direction toward the one side in the second direction while going away from the worm 18 with respect to the third direction, and each of the two pad elastic pressure plates 54 includes at least one protrusion 64 on a side surface on the other side with respect to the second direction, the at least one protrusion 64 extending in the first direction and corresponding to a portion of the two pad elastic pressure plates 54 that presses the two holder-pressed surfaces 52a.

More specifically, in the present example, the heights with respect to the second direction of two protrusions 64f corresponding to the at least one protrusion 64 provided on each of the two pad elastic pressure plates 54 are set to be the same as each other. In addition, the tip-end portion of each of the two protrusions 64f is configured by a flat surface that is perpendicular to the second direction. However, in a case of implementing a worm gear reducer according to one aspect of the present disclosure, the protrusions may be omitted.

In the present example, each of the two holder-pressed surfaces 52a of the holder 19 is an inclined surface that is inclined in a direction toward the one side in the second direction while going away from the worm 18 with respect to the third direction. More specifically, each of the two holder-pressed surfaces 52a is configured by a flat surface that is inclined in a direction toward the one side in the second direction while going away from the worm 18 with respect to the third direction.

In other words, in the present example, in a state in which the two pad elastic pressure plates 54 are elastically deformed after the pad 20 is assembled to the protruding portion 44 of the holder 19, the tip-end portions of the two protrusions 64f corresponding to the portions with respect to the third direction of the side surfaces on the other side of each of the pad elastic pressure plates 54 come into surface contact with each of the two holder-pressed surfaces 52a at least one location with respect to the third direction (two locations of the tip-end portions of the two protrusions 64f in the present example). Therefore, with the worm gear reducer of the present example, in a state in which the pad 20 is assembled to the protruding portion 44 of the holder 19, the tip-end portions of each of the two protrusions 64f can be reliably brought into contact with the holder-pressed surfaces 52a. As a result, the elastic deformation of the pad elastic pressure plates 54 can be stabilized, and the surface pressure at the contact portions between the tip-end portions of the protrusions 64f and the holder-pressed surfaces 52a can be prevented from becoming excessive, thereby preventing wear from occurring at the contact portions.

Note that the inclination angle θₕ of the holder-pressed surfaces 52a with respect to a virtual plane perpendicular to the second direction is not particularly limited as long as the tip-end portions of each of the two protrusions 64f can be made to come in contact with the holder-pressed surfaces 52a when the pad 20 is assembled to the protruding portion 44 of the holder 19, but can be, for example, 3° or more and 10° or less, and preferably 5° or more and 8° or less.

In the present example, each of the two holder-pressed surfaces 52a is configured by a flat surface that inclines in a direction toward the one side in the second direction while going away from the worm 18 with respect to the third direction; however, each of the holder-pressed surfaces can also be configured by a curved surface having a cross section in a virtual plane perpendicular to the third direction that is an arc-shaped surface that inclines in a direction toward the one side in the second direction while going away from the worm with respect to the third direction.

In the present example, each of the two holder-pressed surfaces 52a of the holder 19 is an inclined surface that is inclined in a direction toward the one side in the second direction while going away from the worm 18 with respect to the third direction; however, in a case of implementing a worm gear reducer according to one aspect of the present disclosure, the holder-pressed surface can be a flat surface perpendicular to the second direction, and the other side surface of the pad elastic pressure plate can be configured, in a free state, as a flat surface that is inclined in a direction toward the other side in the second direction while going away from the worm with respect to the third direction.

The configuration and the effects of the other parts of the sixth example are similar to those of the first example.

Note that in the above-mentioned first to sixth examples, construction is adopted in which the two holder-engaging portions are configured by two holder inclined surfaces, and the two pad-engaging portions are formed by two pad inclined surfaces that are in surface contact with the two holder inclined surfaces. However, in a case of implementing a worm gear reducer according to one aspect of the present disclosure, as long as it is possible to regulate (suppress or prevent) displacement of the pad relative to the holder in the third direction based on contact between the two holder-engaging portions and the two pad-engaging portions, the holder-engaging portion and the pad-engaging portion can adopt any shape, without being limited to the holder inclined surface and the pad inclined surface. In addition, in a case in which holder inclined surfaces and pad inclined surfaces are employed, these inclined surfaces are not limited to being inclined flat surfaces, and inclined curved surfaces may also be employed.

The above-mentioned first to sixth examples may be implemented in any suitable combination as long as no contradiction occurs.

### REFERENCE SIGNS LIST

1 Electric power steering device
2 Steering wheel
3 Steering shaft
4 Steering column
5a, 5b Universal joint
6 Intermediate shaft
7 Steering gear unit
8 Electric assist device
9 Pinion shaft
10 Rack shaft
11 Housing
12 Rack housing
13 Pinion housing
14 Worm gear reducer
15 Electric motor
16 Housing
17 Worm wheel
18 Worm
19 Holder
20, 20z Pad
21, 21a, 21z Elastic member
22 Wheel housing
23 Worm housing
24 Wheel teeth
25 Worm teeth
26 Female spline portion
27 Output shaft
28 Male spline portion
29 Ball bearing
30 Small diameter cylindrical surface portion
31 Large diameter cylindrical surface portion
32 Support bearing
33 Inner ring
34 Outer ring
35 Ball
36 Bushing
37 Retainer
38 Fitting tubular portion
39 Inward-facing flange portion
40 Wave washer
41 Holder inclined surface
42 Annular portion
43 Side plate portion
44 Protruding portion
45 Flat portion
46 Inner circumferential surface
47 Recessed portion
48 Stepped portion
49 Guide portion
50 Connecting portion
51 Inner surface
52, 52a Holder-pressed surface
53, 53a Pad inclined surface
54, 54z Pad elastic pressure plate
55 Base portion
56 Through hole
57 Flat plate portion
58 Base body
59 Base extending portion
60 Oval hole portion
61 Circular hole portion
62 Pressed portion
63 Pedestal surface portion
64, 64a, 64b, 64c, 64d, 64e, 64f, 64z1, 64z2 Protrusion
65 Slit
66 Discontinuous portion
67, 67a Base portion
68, 68a, 68z Arm portion
69 Bent portion
70 Constricted portion
71 Base-side wide portion
72, 72z Narrow portion
73 Tip-end-side wide portion
100 Worm gear reducer
101 Housing
102 Worm wheel
103 Worm
104 Wheel housing
105 Worm housing
106 Wheel teeth
107 Rotating shaft
108 Worm teeth
109a, 109b Ball bearing
110 Holder
111 Large diameter portion
112 Bushing
113 Electric motor
114 Pad
115 Torsion coil spring

## Claims

1. A worm gear reducer, comprising:
a housing having a wheel housing and a worm housing arranged at a skewed position to the wheel housing, the worm housing having an intermediate portion that opens to the wheel housing;
a worm wheel having wheel teeth on an outer circumferential surface thereof, and rotatably supported inside the wheel housing;
a worm having worm teeth on an outer circumferential surface thereof, the worm teeth engaging with the wheel teeth, and rotatably supported inside the worm housing;
a holder arranged between a tip-end portion of the worm and the worm housing;
a pad fitted onto the tip-end portion of the worm; and
an elastic member assembled to the holder and elastically biassing the tip-end portion of the worm toward the worm wheel through the pad; wherein
the holder has two holder-engaging portions provided at positions sandwiching the pad from both sides with respect to a third direction perpendicular to both a first direction that is a biasing direction by the elastic member and a second direction that is an axial direction of the worm housing, and two holder-pressed surfaces facing one side of the second direction;
the pad has two pad-engaging portions that are provided on both sides with respect to the third direction and come in contact with the two holder-engaging portions, and two pad elastic pressure plates that are located farther on the one side in the second direction than the two pad-engaging portions, and that extend from a central portion with respect to the third direction of the pad to sides separated from each other with respect to the third direction; and
portions with respect to the third direction of side surfaces on the other side with respect to the second direction of the two pad elastic pressure plates come in contact with the two holder-pressed surfaces and elastically press the two holder-pressed surfaces toward the other side in the second direction, thereby applying a preload having components opposite to each other with respect to the third direction to contact portions between the holder-engaging portion and the pad-engaging portion, and the portions with respect to the third direction are in surface contact with or in line contact at least two locations with respect to the third direction with the two holder-pressed surfaces.

2. The worm gear reducer according to claim 1, wherein the two pad elastic pressure plates respectively have at least one protrusion extending in the first direction on the side surfaces on the other side with respect to the second direction, and the portions with respect to the third direction are respectively formed by a tip-end portion of the at least one protrusion; and
a height of the at least one protrusion with respect to the second direction increases continuously or stepwise while going away from the worm with respect to the third direction.

3. The worm gear reducer according to claim 2, wherein
the at least one protrusion is configured by a plurality of protrusions arranged at a distance from each other in the third direction; and
a height of each of the plurality of protrusions with respect to the second direction becomes greater as the protrusion is positioned farther from the worm with respect to the third direction.

4. The worm gear reducer according to claim 3, wherein a cross-sectional shape of each of the tip-end portions of the plurality of protrusions with respect to an imaginary plane perpendicular to the first direction is a straight line perpendicular to the second direction.

5. The worm gear reducer according to claim 2 or 3, wherein the tip-end portion of the at least one protrusion is configured by an inclined surface that is inclined in a direction toward the other side in the second direction while going away from the worm with respect to the third direction.

6. The worm gear reducer according to any one of claims 2 to 5, wherein each of the two pad elastic pressure plates, at an end portion of a central side with respect to the third direction of the pad, has a slit that penetrates in the second direction and extends in the first direction.

7. The worm gear reducer according to claim 6, wherein a height with respect to the second direction of the at least one protrusion decreases while going from a central portion toward both sides with respect to the first direction.

8. The worm gear reducer according to claim 1, wherein one of the two holder-pressed surfaces and the portions of the two pad elastic pressure plates that press the two holder-pressed surfaces are inclined surfaces that are inclined in a direction that approach the other of the two holder-pressed surfaces and the portions of the two pad elastic pressure plates that press the two holder-pressed surfaces with respect to the second direction while going away from the worm with respect to the third direction.

9. The worm gear reducer according to claim 8, wherein the two holder-pressed surfaces are inclined surfaces that are inclined in a direction toward the one side in the second direction while going away from the worm with respect to the third direction; and
the two pad elastic pressure plates respectively include at least one protrusion on side surfaces on the other side with respect to the second direction that are portions of the two pad elastic pressure plates that press the two holder-pressed surfaces, the at least one protrusion extending in the first direction.

10. The worm gear reducer according to any one of claims 1 to 9, wherein the two holder-engaging portions are two holder inclined surfaces that extend in the first direction and are inclined toward each other while going toward the one side in the second direction; and
the two pad-engaging portions are two pad inclined surfaces that come into surface contact with the two holder inclined surfaces.

11. The worm gear reducer according to any one of claims 1 to 10, wherein the elastic member is a leaf spring.

12. The worm gear reducer according to claim 11, wherein
the elastic member has a partially cut cylindrical shape having a discontinuous portion at one location in the circumferential direction when viewed from the second direction;
the elastic member has a base portion located on a side far from the worm wheel with respect to the first direction, and two arm portions extending toward a circumferential direction from end portions on both sides in the circumferential direction of the base portion;
each of the two arm portions has, in order from the side close to the base portion in the circumferential direction, a base-side wide portion, a narrow portion, and a tip-end-side wide portion;
a width dimension in the second direction of the base-side wide portion and a width dimension in the second direction of the tip-end-side wide portion are equal to each other; and
the narrow portion has a width dimension in the second direction smaller than the width dimension in the second direction of the base-side wide portion and the width dimension in the second direction of the tip-end-side wide portion.
